# EUROPEAN PATENT APPLICATION

(11) **EP 1 592 222 A2**
(43) Date of publication of application: **02.11.2005**
(21) Application number: 05252604.3
(22) Date of filing: 26.04.2005
(51) Int. Cl.: H04N 1/32

(54) **Service providing method, service providing apparatus, computer-readable storage medium and computer program product**

(30) Priority: 26.04.2004 JP 2004130211; 15.04.2005 JP 2005117648
(71) Applicant: Ricoh Company, Ltd., Tokyo 143-8555 (JP)
(72) Inventor: Araumi, Yuichi, Tokyo (JP)
(74) Representative: Mounteney, Simon James

(57) **Abstract**

A service providing apparatus provides services in response to requests from a terminal equipment that is coupled thereto via a network. The apparatus includes a first interface part for a first function and used for connection to the terminal equipment, a second interface part for a second function and shared by the terminal equipment and processes of the service providing apparatus, and a shared function providing part interposed between the first and second interface means for providing shared functions that are used when the terminal equipment that is connected to the service providing apparatus using the first interface means uses the second function.

## Description

### BACKGROUND OF THE INVENTION

### 1. Field of the Invention

The present invention relates to service providing methods, service providing apparatuses, computer-readable storage media and computer program products.

### 2. Description of the Related Art

Recently, an image forming apparatus has been proposed that has the functions of various apparatuses, such as a printer, a copying apparatus, a facsimile apparatus and a scanner, provided within a single housing. Such an image forming apparatus is often referred to as a composite apparatus, a multi-function apparatus or a multi-function peripheral (MFP). In the composite apparatus, a display part, a printing part, an image pickup part and the like are provided within the single housing, and four kinds of applications are provided respectively corresponding to the printer, the copying apparatus, the facsimile apparatus and the scanner. By switching the applications, the composite apparatus can function as the printer, the copying apparatus, the facsimile apparatus and the scanner. For example, a Japanese Laid-Open Patent Application No.2002-82806 proposes such a composite apparatus.

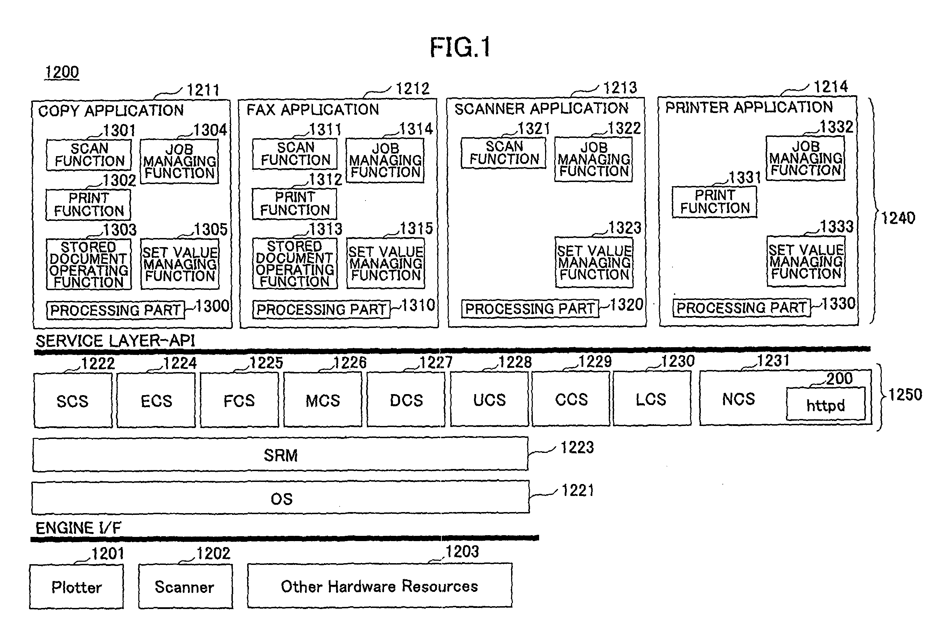

FIG. 1 is a system block diagram showing a functional structure of a conventional composite apparatus. A composite apparatus 1200 shown in FIG. 1 includes a plotter 1201, a scanner 1202, other hardware resources 1203 such as a facsimile apparatus, applications 1240 (1211, 1212, 1213, 1214), control services 1250 (1222, 1224, 1225, 1226, 1227, 1228, 1229, 1230, 1231 (200)), a system resource manager (SRM) 1223 and an operating system (OS) 1221. The copy application 1211 includes a processing part 1300 exclusively for copy, and functions 1301 through 1305. The facsimile application 121 includes a processing part 1310 exclusively for facsimile, and functions 1311 through 1315. The scanner application 1213 includes a processing part 1320 exclusively for scanner, and functions 1321 through 1323. The printer application 1214 includes a processing part 1330 exclusively for printer, and functions 1331 through 1333.

As may be seen from FIG. 1, the conventional composite apparatus 1200 is designed for each application 1240. For example, the job managing function 1304 of the copy application 1211 and the job managing function 1314 of the facsimile application 121 are implemented separately, and the scan function 1301 of the copy application 1211 and the scan function 1311 of the scanner application 1213 are implemented separately. In other words, functions that carry out processes that are the same on the functional level, are implemented separately within the plurality of applications 1240. Accordingly, there were problems in that the number of design steps for the conventional composite apparatus 1200 becomes extremely large, and that the code size of each application 1240 also becomes large.

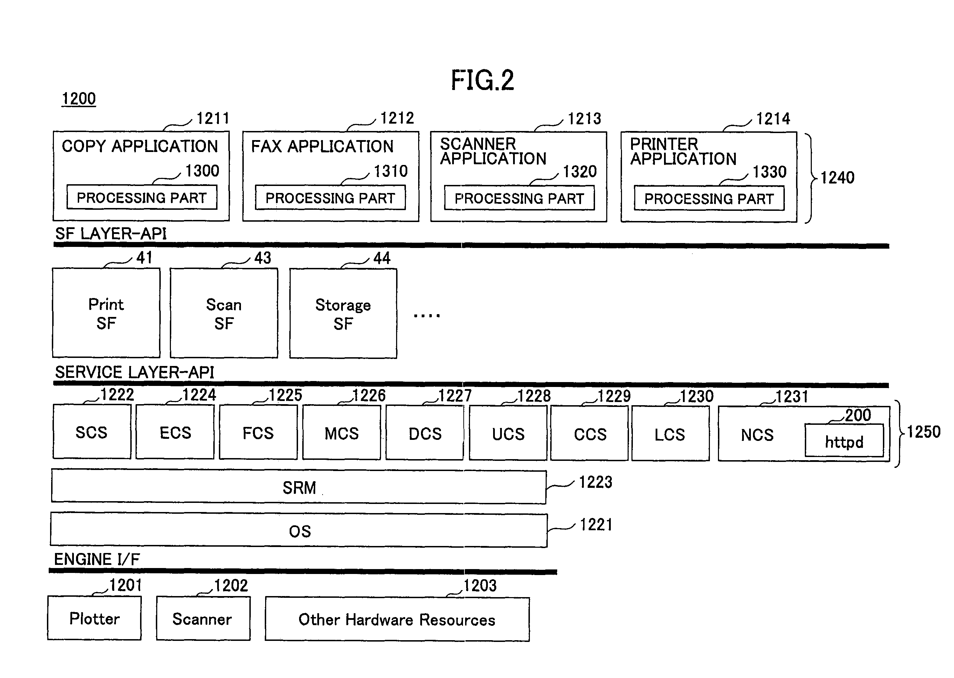

In order to eliminate these problems, those functions that carry out processes that are the same on the functional level may be integrated into a shared function (SF) and implemented in the composite apparatus 1200. FIG. 2 is a system block diagram showing a functional structure of an example of the composite apparatus having the shared functions (SFs) implemented therein.

Compared to the composite apparatus 1200 shown in FIG. 1, the functional structure of the composite apparatus 1200 shown in FIG. 2 has the functions that carry out the processes that are the same on the function level (and implemented within the plurality of applications 1240 in the case of the composite apparatus 1200 shown in FIG. 1) integrated into each shared function (SF) and implemented, as a print SF 41 that provides the print function, a scan SF 43 that provides the scan function, and a storage SF 44 that provides the storage function, for example, as shown in FIG. 2.

In the composite apparatus 1200 shown in FIG. 2, the number of design steps for each application 1240 is reduced by the use of the SFs 41, 43 and 44, and the code size of each application 1240 can be made small.

However, in the composite apparatus 1200 shown in FIG. 2, it is necessary to implement functions related to processes via a network, such as user authentication and session management, in the facsimile application 1212, the scanner application 1213, the printer application 1214 and the like when using the scanner via the network, using the facsimile via the network or printing the document stored via the network, for example.

Therefore, in the case of the composite apparatus 1200 shown in FIG. 1 in which the functions that carry out the processes that are the same on the function level are implemented in each of the applications 1240, there were problems in that the number of design steps becomes extremely large, and the code size of each application 1240 also becomes large. In addition, there was a problem in that similar test items must be carried out with respect to each of the created applications 1240.

On the other hand, in the case of the composite apparatus 1200 shown in FIG. 2, every time the function related to the process via the network is modified, for example, a similar modification must be made in each of the applications 1240. As a result, there were problems in that the modification to each of the applications 1240 may cause generation of bugs or the like, and the quality is difficult to maintain.

In addition, in the conventional composite apparatus 1200, a protocol interface part for providing a corresponding interface with respect to the various kinds of protocols cannot be designed unless the kind of middlewear provided is known. Furthermore, when a middlewear is newly added, it is necessary to create a new interface part accordingly, and there were problems in that the development of the middlewear requires extensive work, and it is difficult to cope with the addition of a new function and to cope with a new protocol.

### SUMMARY OF THE INVENTION

Accordingly, it is a general object of the present invention to provide a novel and useful service providing method, service providing apparatus, computer-readable storage medium and computer program product, in which the problems described above are suppressed.

Another and more specific object of the present invention is to provide a service providing method, a service providing apparatus, a computer-readable storage medium and a computer program product, which may be developed with ease and can provide services having a desired quality.

Still another and more specific object of the present invention is to provide a service providing apparatus for providing a plurality of services in response to requests from a terminal equipment that is coupled thereto via a network, characterized by first interface means for a first function and used for connection to the terminal equipment; second interface means for a second function and shared by the terminal equipment and processes of the service providing apparatus; and shared function providing means, interposed between the first and second interface means, for providing shared functions that are used when the terminal equipment that is connected to the service providing apparatus using the first interface means uses the second function. According to the service providing apparatus of the present invention, it is possible to develop the service providing apparatus with ease and provide services having a desired quality.

A further object of the present invention is to provide a service providing method adapted to a service providing apparatus that provides a plurality of services in response to requests from a terminal equipment that is coupled thereto via a network, said service providing apparatus comprising first interface means for a first function and used for connection to the terminal equipment, and second interface means for a second function and shared by the terminal equipment and processes of the service providing apparatus, and shared function providing means interposed between the first and second interface means, characterized by a step providing the shared functions by the shared function providing means when the terminal equipment is connected to the service providing apparatus using the first interface means and uses the second function. According to the service providing method of the present invention, it is possible to develop the service providing apparatus with ease and provide services having a desired quality.

Another object of the present invention is to provide a computer program product comprising a program for causing a computer to operate as a service providing apparatus for providing a plurality of services in response to requests from a terminal equipment that is coupled thereto via a network, characterized in that the program causes the computer to function as first interface means for a first function and used for connection to the terminal equipment; second interface means for a second function and shared by the terminal equipment and processes of the service providing apparatus; and shared function providing means, interposed between the first and second interface means, for providing shared functions that are used when the terminal equipment that is connected to the service providing apparatus using the first interface means uses the second function. According to the computer program product of the present invention, it is possible to develop the service providing apparatus with ease and provide services having a desired quality.

Still another object of the present invention is to provide a computer-readable storage medium comprising the computer program product described above, characterized in that the program is stored in a recording medium. According to the computer-readable storage medium of the present invention, it is possible to develop the service providing apparatus with ease and provide services having a desired quality.

Other objects and further features of the present invention will be apparent from the following detailed description when read in conjunction with the accompanying drawings.

### BRIEF DESCRIPTION OF THE DRAWINGS

FIG. 1 is a system block diagram showing a functional structure of a conventional composite apparatus;
FIG. 2 is a system block diagram showing a functional structure of an example of the composite apparatus having shared functions (SFs) implemented therein;
FIG. 3 is a system block diagram showing a functional structure of a composite apparatus according to an embodiment of the present invention;
FIG. 4 is a diagram showing a functional structure of an entire framework;
FIG. 5 is a diagram showing a functional structure of an UPnP printer for a case where the framework is applied to the UPnP printer;
FIG. 6 is a diagram showing a functional structure of a printer capable of equipment management by a browser for a case where the framework is applied to the printer capable of equipment management by the browser;
FIG. 7 is a diagram showing a functional structure of a Web service and Web browser compatible composite apparatus for a case where the framework is applied to the Web service and Web browser compatible composite apparatus;
FIG. 8 is a diagram showing a functional structure of an exclusive client interface compatible composite apparatus for a case where the framework is applied to the exclusive client interface compatible composite apparatus;
FIG. 9 is a sequence diagram for explaining a print operation;
FIG. 10 is a sequence diagram for explaining a document referring operation;
FIG. 11 is a sequence diagram for explaining a modification of user information;
FIG. 12 is a class diagram showing a relationship of classes related to management of authentication and right of use;
FIG. 13 is a diagram showing a functional structure of a server platform;
FIG. 14 is a sequence diagram showing a document referring operation;
FIG. 15 is a sequence diagram showing a user information referring operation;
FIG. 16 is a class diagram showing a relationship of classes related to referring of information;
FIG. 17 is a class diagram showing a relationship of the classes related to referring of information;
FIG. 18 is a diagram showing a functional structure of the server platform;
FIG. 19 is a sequence diagram showing a setting of document information;
FIG. 20 is a sequence diagram showing a setting of user information;
FIG. 21 is a class diagram showing a relationship of the classes related to setting of information;
FIG. 22 is a state transition diagram for explaining an information setting request;
FIG. 23 is a diagram showing a functional structure of the server platform;
FIG. 24 is a sequence diagram showing a print operation;
FIG. 25 is a sequence diagram showing a scanner operation;
FIG. 26 is a class diagram showing a relationship of classes related to the print and scanner operations;
FIG. 27 is a state transition diagram for explaining a job operation request;
FIG. 28 is a diagram showing a functional structure of the server platform;
FIG. 29 is a diagram showing an entire functional structure of the server platform;
FIG. 30 is a diagram showing a link of the shared function and the server platform;
FIG. 31 is a diagram showing a link of the shared function and the server platform;
FIG. 32 is a diagram for explaining differences in interfaces of the SF layer and the service layer;
FIG. 33 is a class diagram showing an entire relationship of the classes;
FIG. 34 is a class diagram showing a shared function providing part that is formed by a single part;
FIG. 35 is a flow chart for explaining request and response operations;
FIG. 36 is a collaboration diagram for a case where a check of a right of use in a step S3 shown in FIG. 35 is OK;
FIG. 37 is a flow chart for explaining a job operation;
FIG. 38 is a collaboration diagram for a case where the job operation is requested;
FIG. 39 is a diagram showing an entire functional structure of the server platform;
FIG. 40 is a class diagram showing an entire relationship of the classes that are implemented in the shared function providing part of the server platform shown in FIG. 39;
FIG. 41 is a diagram showing a functional structure of an audio visual equipment for a case where the framework is applied to the audio visual equipment;
FIG. 42 is a diagram showing a functional structure of a cooking appliance for a case where the framework is applied to the cooking appliance;
FIG. 43 is a diagram showing a functional structure of an air conditioner for a case where the framework is applied to the air conditioner; and
FIG. 44 is a diagram showing a functional structure of a washing machine for a case where the framework is applied to the washing machine.

### DESCRIPTION OF THE PREFERRED EMBODIMENTS

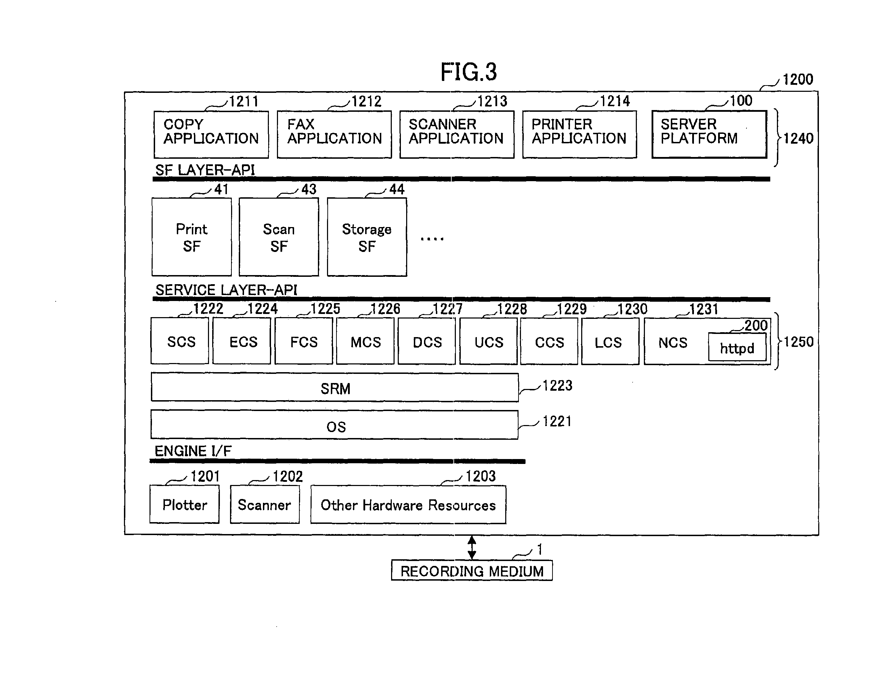

A description will be given of embodiments of the present invention, by referring to FIG. 3 and the subsequent drawings. FIG. 3 is a system block diagram showing a functional structure of a composite apparatus according to an embodiment of the present invention.

A composite apparatus 1200 shown in FIG. 3 includes a plotter 1201, a scanner 1202, other hardware resources 1203 such as a facsimile apparatus, applications 1240 (1211, 1212, 1213, 1214, 100), control services 1250 (1222, 1224, 1225, 1226, 1227, 1228, 1229, 1230, 1231 (200)), a system resource manager (SRM) 1223 and an operating system (OS) 1221. The control services 1250 analyzes the process requests from the applications 1240, and generate acquisition requests for the hardware resources. The system resource manager 1223 manages one or a plurality of hardware resources, and carries out an arbitration with respect to the acquisition requests from the control services 1250.

The control services 1250 are formed by a plurality of service modules, namely, a system control service (SCS) 1222, an engine control service (ECS) 1224, a facsimile control service (FCS) 1225, a memory control service (MCS) 1226, a delivery control service (DCS) 1227, a user control service (UCS) 1228, a certification control service (CCS) 1229, a log control service (LCS) 1230, and a network control service (NCS) 1231.

The operating system 1221 is formed by a UNIX (registered trademark) operating system (OS), for example. The system resource manager 1223 carries out the system control and the resource management together with the system control service 1222. The system control service 1222 carries out a plurality of functions including application management, operation part control, system screen display, LED display, resource management, and interrupt application control. The engine control service 1224 controls an engine part of the plotter 1201 or the like.

The facsimile control service 1225 provides an application program interface (API) for carrying out facsimile transmission and reception using PSTN/ISDN networks from each application layer of a system controller, registration/reference of various facsimile data managed by a backup memory (backup SRAM), facsimile reading, facsimile reception printing, and multi-function (composite) transmission and reception.

The memory control service 1226 carries out a memory control. The delivery control service 1227 carries out processes such as transferring stored documents ton an external server, a user's personal computer (PC) or the like. The user control service 1228 carries out management and the like of user information and/or group information of a group to which the user belongs. The certification control service 1229 carries out user authentication or the like. The log control service 1230 carries out management and the like of logs.

The network control service 1231 carries out an intervening process when distributing data received from the network by each protocol to each application, and transmitting data from the application to the network, for example.

The applications 1240 include a copy application 1211, a facsimile application 1212, a scanner application 1213, a printer application 1214, and a server platform 100.

Compared to the functional structure of the composite apparatus 1200 shown in FIG. 2, the functional structure of the composite apparatus 1200 shown in FIG. 3 differs in that the functions related to processes via the network and implemented within the plurality of applications 1240 in FIG. 2 are integrated and implemented within the server platform 100 in FIG. 3.

A print shared function (SF) 41, a scan shared function (SF) 43 and a storage shared function (SF) 44 shown in FIG. 3 are not only used from each application within the composite apparatus 100, but also used from the server platform 100. The print SF 41, the scan SF 43 and the storage SF 44 are not dependent upon the devices, the model, the operating system and the like that are provided in the composite apparatus 1200, and form components that can provide an interface for macro processes in units of functions.

The programs of the composite apparatus 1200 may be preinstalled in the composite apparatus 1200 or, may be provided to the composite apparatus 1200 by way of a recording medium 1 or downloaded to the composite apparatus 1200 via the network. A CPU of the composite apparatus 1200 executes processes according to the programs.

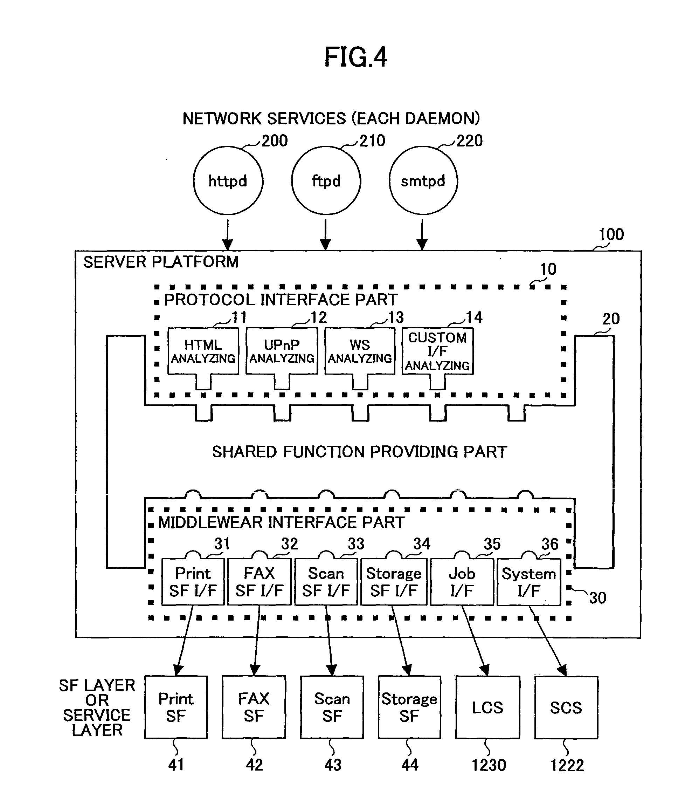

FIG. 4 is a diagram showing a functional structure of an entire framework. As shown in FIG. 4, the framework includes, as network services (first functions), an httpd 200, an ftpd (File Transfer Protocol Daemon) 210 and an smtpd (Simple Mail Transfer Protocol Daemon) 220. The httpd 200, the ftpd 210 and the smtpd 220 are included within the network control service 1231.

In addition, the framework includes, as shared function (SF) layers or service layers (second functions), the print SF 41 that provides the print function, the facsimile SF 42 that provides the facsimile function, the scan SF 43 that provides the scan function, the storage SF 44 that provides the storage function, the log control service 1230 that carries out the management of the log and the like, and the system control service 1222.

The server platform 100 includes a middlewear interface part (second interface part or means) 30 for utilizing middlewear groups that provide various kinds of functions, a protocol interface part (first interface part or means) 10 for analyzing various kinds of protocols and operation sequences, and a shared function providing part (or means) 20 for defining the functions that are shared (that is, used in common) when carrying out the various kinds of functions according to the various kinds of protocols.

The protocol interface part 10 provides an interface that is shared (that is, used in common) from the networks. For example, the protocol interface part 10 includes an HTML analyzing part 11 for analyzing the HTML (HyperText Markup Language), an UPnP analyzing part 12 for analyzing the UPnP (Universal Plug and Play), a WS analyzing part 13 for analyzing the WS (Web Service), and a custom interface (I/F) analyzing part 14 for analyzing a custom I/F.

The middlewear interface part 30 provides an interface that is not only shared from the networks, but also shared from the applications 1240 and the shared functions (SFs) within the composite apparatus 1200. The middlewear interface part 30 provides the interface within the equipment, such as the shared function (SF) layer and the service layer.

For example, the middlewear interface part 30 includes a print SF I/F 31 that provides an interface between the shared function providing part 20 and the print SF 41, a facsimile SF I/F 32 that provides an interface between the shared function providing part 20 and the facsimile SF 42, a scan SF I/F 33 that provides an interface between the shared function providing part 20 and the scan SF 43, a storage SF I/F 34 that provides an interface between the shared function providing part 20 and the storage SF 44, a job I/F 35 that provides an interface between the shared function providing part 20 and the log control service 1230, and a system I/F 36 that provides an interface between the shared function providing part 20 and the system control service 1222.

By employing the functional structure of the framework shown in FIG. 4, the designer of the protocol interface part 10 only needs to know the interface between the protocol interface part 10 and the shared function providing part 20 in order to design the protocol interface part 10. Further, the designer of the middlewear interface part 30 only needs to know the interface between the middlewear interface part 30 and the shared function providing part 20 in order to design the middlewear interface part 30.

Accordingly, in the case of the framework having the functional structure shown in FIG. 4, the protocol interface part 10 and the middlewear interface part 30 can be designed independently, and a design modification or the like does not affect each other. For this reason, it is possible to easily cope with situations such as the addition of a new function the use of a new protocol.

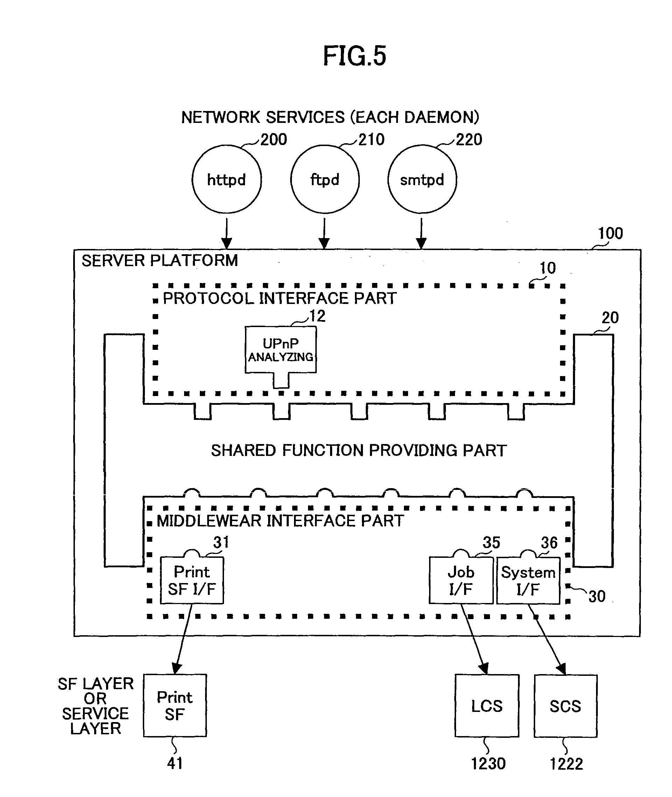

Next, a description will be given of a functional structure of a UPnP compatible printer for a case where the framework shown in FIG. 4 is applied to this compatible UPnP printer, by referring to FIG. 5. FIG. 5 is a diagram showing the functional structure of the UPnP compatible printer for the case where the framework is applied to the compatible UPnP printer.

As shown in FIG. 5, the UPnP compatible printer includes, as network services, an httpd 200, an ftpd 210 and an smtpd 220.

In addition, the server platform 100 includes a protocol interface part 10, a shared function providing part 20 and a middlewear interface part 30. As shown in FIG. 5, the protocol interface part 10 includes an UPnP analyzing part 12. Moreover, the middlewear interface part 30 includes a print SF I/D 31, a job I/F 35 and a system I/F 36, as shown in FIG. 5. The UPnP compatible printer includes, as the SF layers or the service layers, a print SF 41, a log control service 1230 and a system control service 1222.

As shown in FIG. 5, the framework shown in FIG. 4 can also be applied to the UPnP compatible printer. The programs of the UPnP compatible printer may be preinstalled in the UPnP compatible printer or, may be provided to the UPnP compatible printer by way of a recording medium 1 or downloaded to the UPnP compatible printer via the network. A CPU of the UPnP compatible printer executes processes according to the programs.

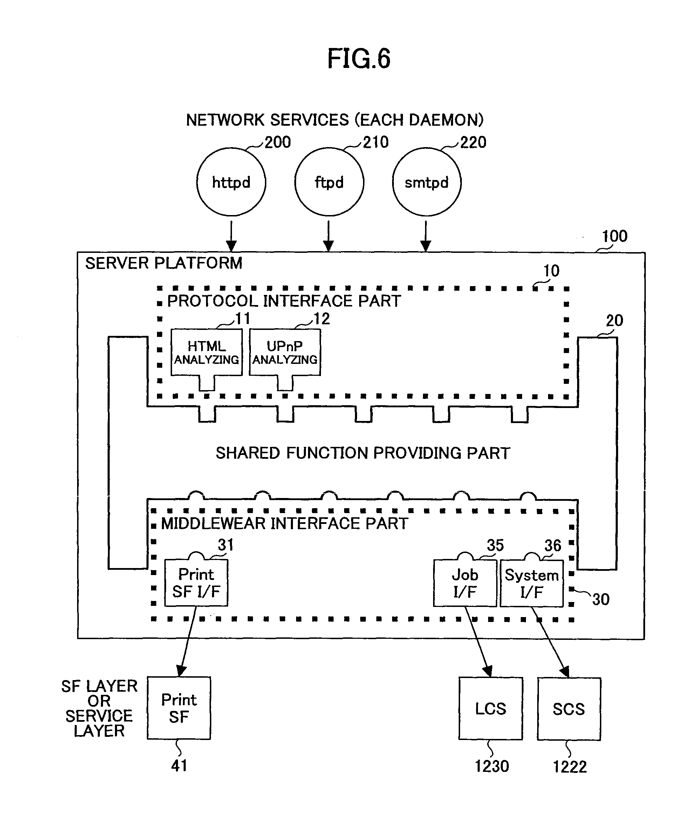

Next, a description will be given of a functional structure of a printer capable of equipment management by a browser for a case where the framework shown in FIG. 4 is applied to this printer capable of equipment management by the browser, by referring to FIG. 6. FIG. 6 is a diagram showing the functional structure of the printer capable of equipment management by the browser for the case where the framework is applied to this printer capable of equipment management by the browser.

As shown in FIG. 6, the printer capable of equipment management by the browser includes, as network services, an httpd 200, an ftpd 210 and an smtpd 220.

In addition, the server platform 100 includes a protocol interface part 10, a shared function providing part 20 and a middlewear interface part 30. As shown in FIG. 6, the protocol interface part 10 includes an HTML analyzing part 11 and an UPnP analyzing part 12. Moreover, the middlewear interface part 30 includes a print SF I/D 31, a job I/F 35 and a system I/F 36, as shown in FIG. 5. The printer capable of equipment management by the browser includes, as the SF layers or the service layers, a print SF 41, a log control service 1230 and a system control service 1222.

As shown in FIG. 6, the framework shown in FIG. 4 can also be applied to the printer capable of equipment management by the browser. The programs of the printer capable of equipment management by the browser may be preinstalled in the printer capable of equipment management by the browser or, may be provided to the printer capable of equipment management by the browser by way of a recording medium 1 or downloaded to the printer capable of equipment management by the browser via the network. A CPU of the printer capable of equipment management by the browser executes processes according to the programs.

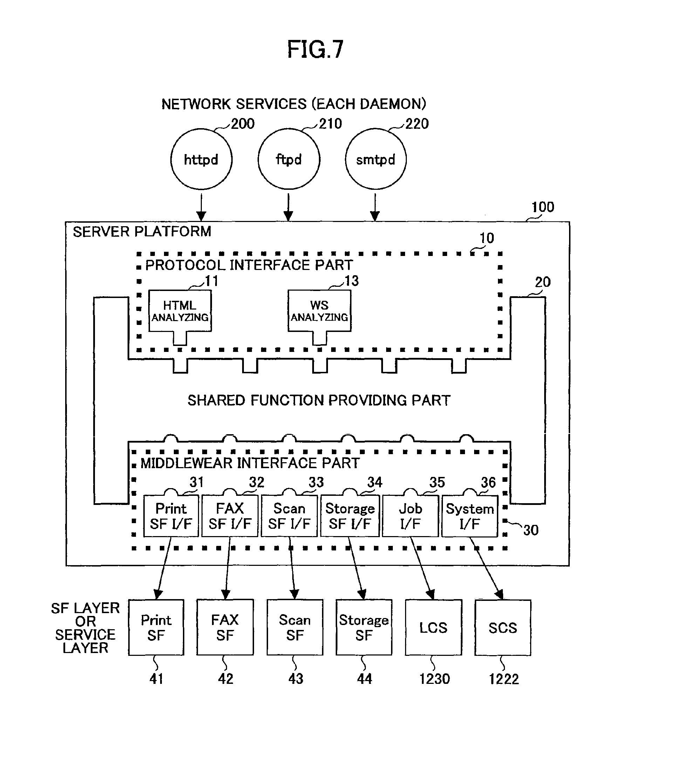

Next, a description will be given of a functional structure of a Web service and Web browser compatible composite apparatus 1200 for a case where the framework shown in FIG. 4 is applied to this Web service and Web browser compatible composite apparatus 1200, by referring to FIG. 7. FIG. 7 is a diagram showing the functional structure of the Web service and Web browser compatible composite apparatus 1200 for the case where the framework is applied to the Web service and Web browser compatible composite apparatus 1200.

As shown in FIG. 7, the Web service and Web browser compatible composite apparatus 1200 includes, as network services, an httpd 200, an ftpd 210 and an smtpd 220.

In addition, the server platform 100 includes a protocol interface part 10, a shared function providing part 20 and a middlewear interface part 30. As shown in FIG. 7, the protocol interface part 10 includes an HTML analyzing part 11, and a WE analyzing part 13. Moreover, the middlewear interface part 30 includes a print SF I/D 31, a facsimile SF I/F 32, a scan SF I/F 33, a storage SF I/F 34, a job I/F 35 and a system I/F 36, as shown in FIG. 7.

The Web service and Web browser compatible composite apparatus 1200 includes, as the SF layers or the service layers, a print SF 41, a facsimile SF 42, a scan SF 43, a storage SF 44, a log control service 1230 and a system control service 1222.

As shown in FIG. 7, the framework shown in FIG. 4 can also be applied to the Web service and Web browser compatible composite apparatus 1200. The programs of the Web service and Web browser compatible composite apparatus 1200 may be preinstalled in the Web service and Web browser compatible composite apparatus 1200 or, may be provided to the Web service and Web browser compatible composite apparatus 1200 by way of a recording medium 1 or downloaded to the Web service and Web browser compatible composite apparatus 1200 via the network. A CPU of the Web service and Web browser compatible composite apparatus 1200 executes processes according to the programs.

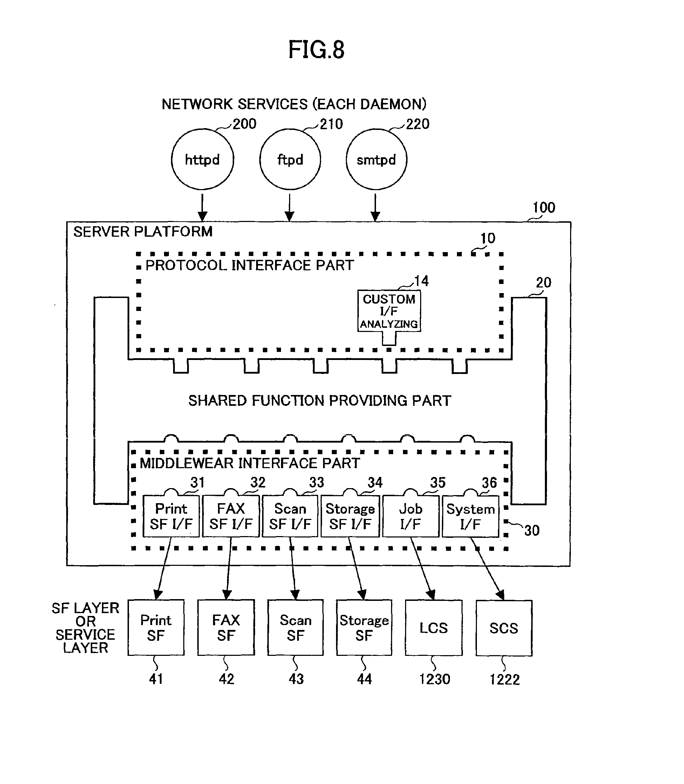

Next, a description will be given of a functional structure of an exclusive client interface compatible composite apparatus 1200 for a case where the framework shown in FIG. 4 is applied to this exclusive client interface compatible composite apparatus 1200, by referring to FIG. 8. FIG. 8 is a diagram showing the functional structure of the exclusive client interface compatible composite apparatus 1200 for the case where the framework is applied to the exclusive client interface compatible composite apparatus 1200.

As shown in FIG. 8, the exclusive client interface compatible composite apparatus 1200 includes, as network services, an httpd 200, an ftpd 210 and an smtpd 220.

In addition, the server platform 100 includes a protocol interface part 10, a shared function providing part 20 and a middlewear interface part 30. As shown in FIG. 8, the protocol interface part 10 includes a custom I/F analyzing part 14. Moreover, the middlewear interface part 30 includes a print SF I/D 31, a facsimile SF I/F 32, a scan SF I/F 33, a storage SF I/F 34, a job I/F 35 and a system I/F 36, as shown in FIG. 8.

The exclusive client interface compatible composite apparatus 1200 includes, as the SF layers or the service layers, a print SF 41, a facsimile SF 42, a scan SF 43, a storage SF 44, a log control service 1230 and a system control service 1222.

As shown in FIG. 8, the framework shown in FIG. 4 can also be applied to the exclusive client interface compatible composite apparatus 1200. The programs of the exclusive client interface compatible composite apparatus 1200 may be preinstalled in the exclusive client interface compatible composite apparatus 1200 or, may be provided to the exclusive client interface compatible composite apparatus 1200 by way of a recording medium 1 or downloaded to the exclusive client interface compatible composite apparatus 1200 via the network. A CPU of the exclusive client interface compatible composite apparatus 1200 executes processes according to the programs.

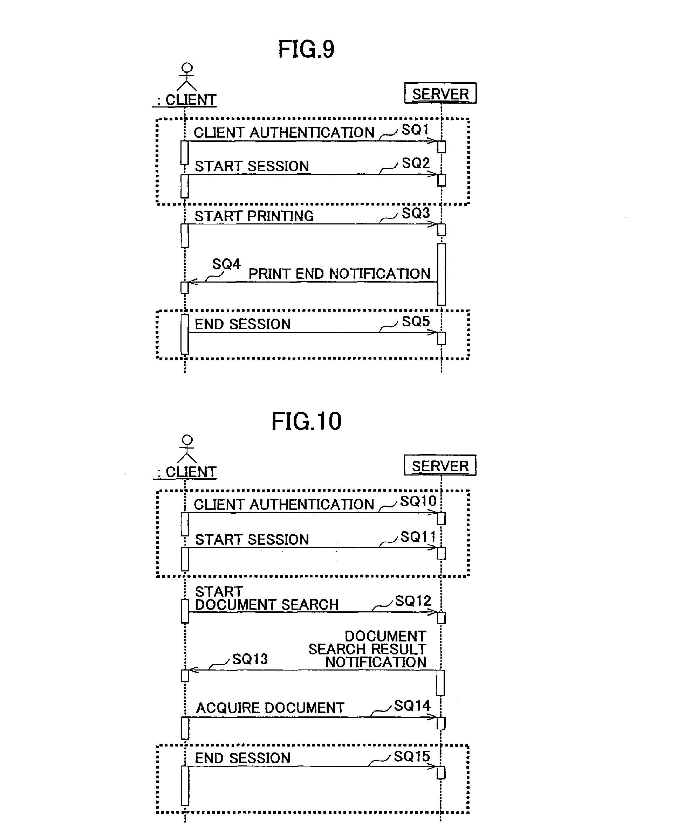

Next, a description will be given of the concept of the functions related to the shared processes via the network, by referring to FIGS. 9 through 11.

FIG. 9 is a sequence diagram for explaining a print operation. Generally, the client who requests the printing sends a client authentication request to a server that is connected to the client via the network (sequence SQ1). The server that receives the client authentication request from the client carries out an authentication based on data related to the authentication and included in the client authentication request, such as a user name and a password.

The authenticated client (that is, a valid client for which the authentication is successful) sends a session start request to the server (sequence SQ2). The server judges whether or not the received session start request is from the valid client, and starts a session with the client if it is judged that the session start request is received from the valid client. Next, the client sends a print start request to the server (sequence SQ3).

The server starts printing based on the print start request, and when the printing ends, the server sends a print end notification to the client (sequence SQ4). When the client receives the print end notification, the client sends a session end request to the server (sequence SQ5).

FIG. 10 is a sequence diagram for explaining a document referring operation. Generally, the client who requests the document referring sends a client authentication request to a server that is connected to the client via the network (sequence SQ10). The server that receives the client authentication request from the client carries out an authentication based on data related to the authentication and included in the client authentication request, such as a user name and a password.

The authenticated client (that is, a valid client for which the authentication is successful) sends a session start request to the server (sequence SQ11). The server judges whether or not the received session start request is from the valid client, and starts a session with the client if it is judged that the session start request is received from the valid client.

Next, the client sends a document search start request to the server (sequence SQ12). The server starts document search based on the document search start request, and when the document search ends, the server sends a document search result notification to the client (sequence SQ13). When the client receives the document search result notification, the client sends a document acquisition request to the server (sequence SQ14). After the client acquires the document, the client sends a session end request to the server (sequence Q15).

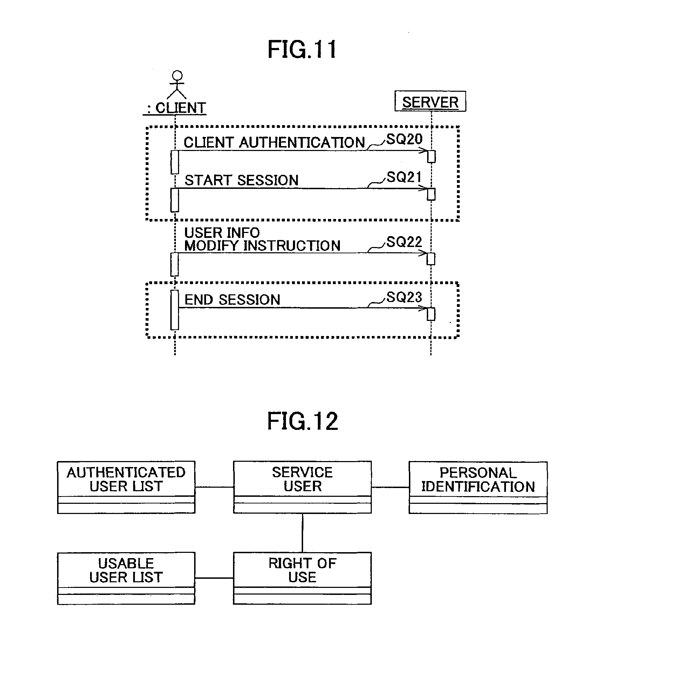

FIG. 11 is a sequence diagram for explaining a modification of user information. Generally, the client who requests the modification of user information sends a client authentication request to a server that is connected to the client via the network (sequence SQ20). The server that receives the client authentication request from the client carries out an authentication based on data related to the authentication and included in the client authentication request, such as a user name and a password.

The authenticated client (that is, a valid client for which the authentication is successful) sends a session start request to the server (sequence SQ21). The server judges whether or not the received session start request is from the valid client, and starts a session with the client if it is judged that the session start request is received from the valid client.

Next, the client sends a user information modifying instruction (or request) to the server (sequence SQ22). When the modification of the user information ends, the client sends a session end request to the server (sequence SQ23).

As shown in FIGS. 9 through 11, the portions surrounded by dotted lines that carry out processes related to the authentication and the session (right of use) management can be shared. A relationship of classes related to management of authentication and right of use, that is implemented in the shared function providing part 20 of the server platform 100, is shown in FIG. 12.

FIG. 12 is a class diagram showing the relationship of the classes related to the management of the authentication and the right of use. As shown in FIG. 12, the shared function providing part 20 includes a service user class, a personal identification class, an authenticated user list (or directory) class, a right of use class, and usable user list (or directory) class.

The service user class indicates users of the service (that is, service users). The personal identification class indicates a personal identification of the service user. The authenticated user list class indicates a list of authenticated service users. The right of use class indicates a right of use (corresponding to a session) of a certain service. The usable user list class indicates a list of users capable of using various kinds of services.

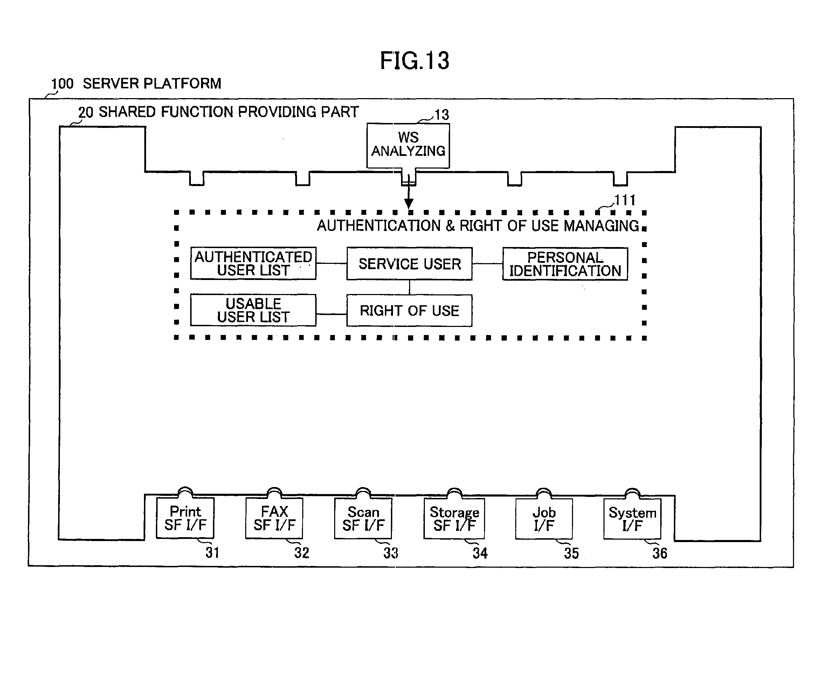

FIG. 13 is a diagram showing a functional structure of the server platform 100. As shown in FIG. 13, the shared function providing part 20 includes an authentication and right of use managing part 111. The authentication and right of use managing part 111 includes a service user class, a personal identification class, an authenticated user list (or directory) class, a right of use class, and usable user list (or directory) class. As shown in FIG. 13, the functions related to the management of the authentication and the right of use (session) may be shared and included in the shared function providing part 20, within the server platform 100.

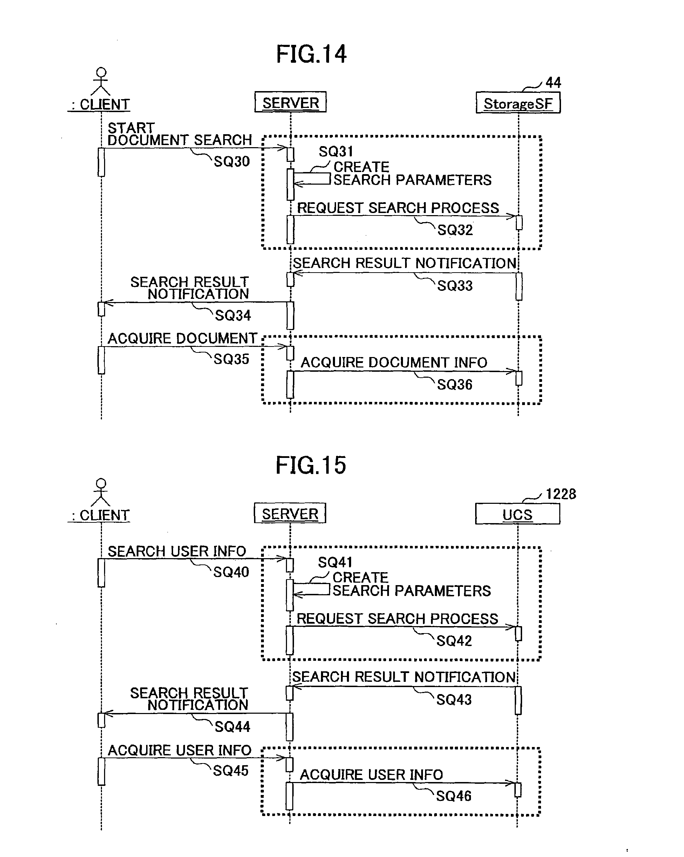

Next, a description will be given of another concept of the functions related to the shared processes via the network, by referring to FIGS. 14 and 15.

FIG. 14 is a sequence diagram showing a document referring operation. The client who requests the document referring sends a document search start request to the server (sequence SQ30), similarly to the sequence SQ12 shown in FIG. 10. When the document search start request is received from the client, the server creates search parameters based on the information included in the document search start request (sequence SQ31). Then, the server supplies the created search parameters to the storage SF 44 and makes a request for a search process (sequence SQ32).

The storage SF 44 makes a search based on the supplied search parameters, and notifies a search result to the server (sequence SQ33). The server notifies the search result received from the storage SF 44 to the client (sequence SQ34).

When the search result is received from the server, the client sends a document acquisition request for a specified document, for example, to the server (sequence SQ35). The sever supplies the document acquisition request for the specified document, for example, to the storage SF 44 (sequence SQ36).

FIG. 15 is a sequence diagram showing a user information referring operation. The user who requests the user information referring sends a user information search start request to the server (sequence SQ40). When the user information search start request is received from the client, the server creates search parameters based on the information included in the user information search start request (sequence SQ41). Then, the server supplies the created search parameters to the user control service 1228 and makes a request for a user information search process (sequence SQ42).

The user control service 1228 makes a search based on the supplied search parameters, and notifies a search result to the server (sequence SQ43). The server notifies the search result received from the user control service 1228 to the client (sequence SQ44). When the search result is received from the server, the client sends an acquisition request for specified user information, for example, to the server (sequence SQ45). The sever supplies the acquisition request for the specified user information, for example, to the user control service 1228 (sequence SQ46).

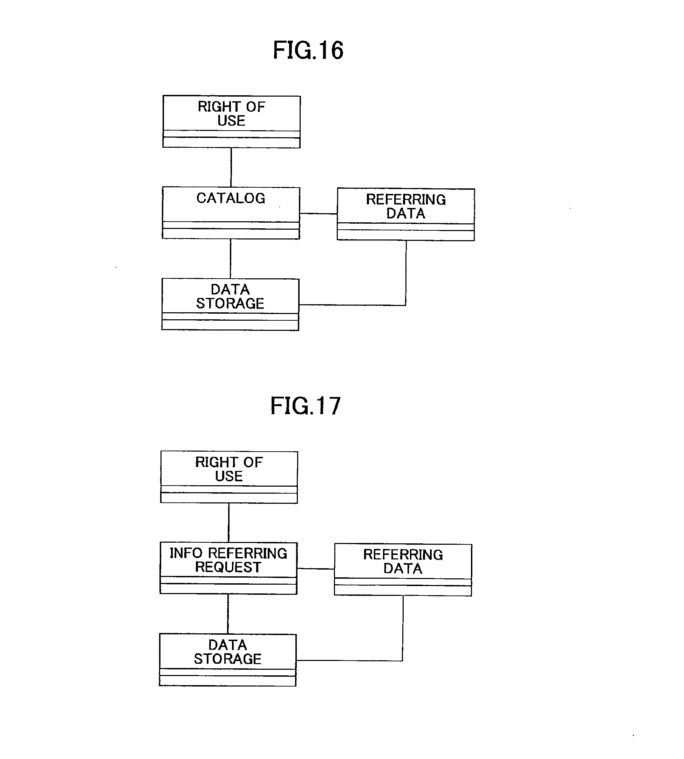

As shown in FIGS. 14 and 15, the portions surrounded by dotted lines that carry out processes related to the referring of information (or data) can be shared. A relationship of classes related to the referring of information, that is implemented in the shared function providing part 20 of the server platform 100, is shown in FIG. 16.

FIG. 16 is a class diagram showing the relationship of the classes related to the referring of information. FIG. 16 shows a model that refers to the search result as it is. As shown in FIG. 16, the shared function providing part 20 includes a catalog class, a referring data class, a data storage class, and a right of use class.

The catalog class indicates a sheet or paper on which the search result of the information within the equipment is to be written. The referring data class indicates the target data that are to be referred to and are written in the catalog. The data storage class indicates a location where the data are stored within the equipment. The right of use class indicates the right of use (corresponding to the session) of a certain service, as described above.

FIG. 17 is a class diagram showing a relationship of the classes related to the referring of information. FIG. 17 shows a model that selects the data to be referred to from the search result. As shown in FIG. 17, the shared function providing part 20 includes an information referring request class, a referring data class, a data storage class, and a right of use class.

The information referring request class indicates a request (or request form) for the information referring within the equipment. The referring data class indicates the target data that are to be referred to and are written in the catalog, as described above. The data storage class indicates a location where the data are stored within the equipment, as described above. The right of use class indicates the right of use (corresponding to the session) of a certain service, as described above. In the following description, it is assumed for the sake of convenience that the classes shown in FIG. 16 are implemented in the shared function providing part 20.

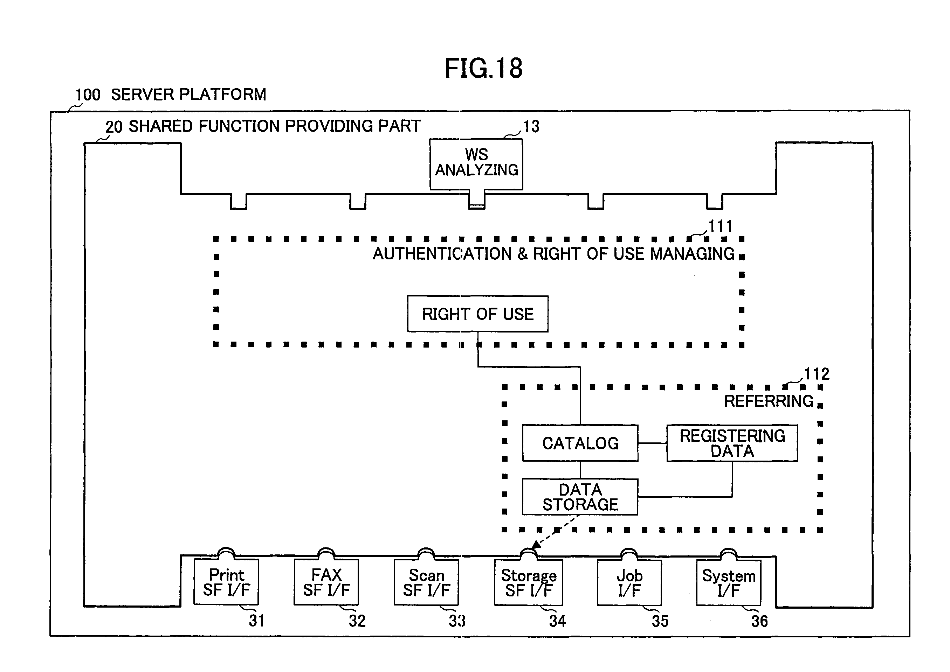

FIG. 18 is a diagram showing a functional structure of the server platform 100. As shown in FIG. 18, the shared function providing part 20 includes an authentication and right of use managing part 111 and a referring part 112. The authentication and right of use managing part 111 includes a right of use class. The referring part 112 includes a catalog class, a referring data class and a data storage class. As shown in FIG. 18, the functions related to the referring of the data (or information) within the equipment may be shared and included in the shared function providing part 20, within the server platform 100.

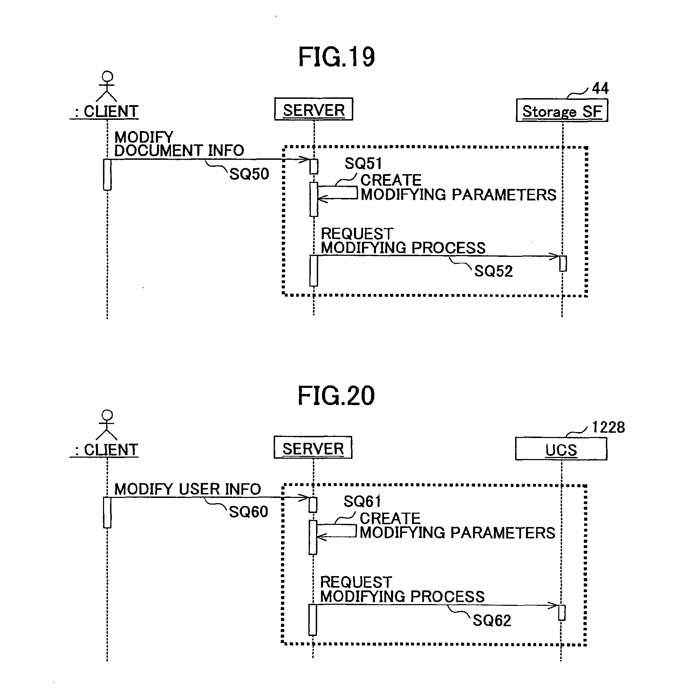

Next, a description will be given of another concept of the functions related to the shared processes via the network, by referring to FIGS. 19 and 20.

FIG. 19 is a sequence diagram showing a setting of document information. The client who requests modifying of the document information sends a document information modifying request to the server (sequence SQ50). When the document information modifying request is received from the client, the server creates modifying parameters based on information included in the document information modifying request (sequence SQ51). Then, the server supplies the created modifying parameters to the storage SF 44 and requests a modifying process (sequence SQ52).

FIG. 20 is a sequence diagram showing a setting of user information. The client who requests modifying of the user information sends a user information modifying request to the server (sequence SQ60). When the user information modifying request is received from the client, the server creates modifying parameters based on information included in the user information modifying request (sequence SQ61). Then, the server supplies the created modifying parameters to the user control service 1228 and requests a modifying process (sequence SQ62).

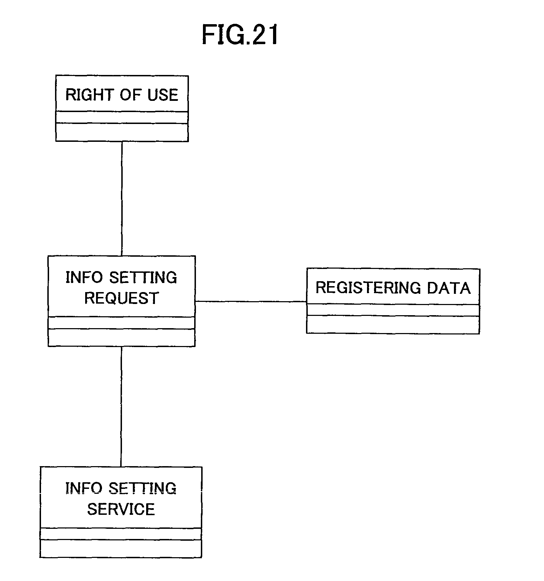

As shown in FIGS. 19 and 20, the portions surrounded by dotted lines that carry out processes related to the setting of information (or data) can be shared. A relationship of classes related to the setting of information, that is implemented in the shared function providing part 20 of the server platform 100, is shown in FIG. 21.

FIG. 21 is a class diagram showing the relationship of the classes related to the setting of information. As shown in FIG. 21, the shared function providing part 20 includes an information setting request class, a registering data class, an information setting service class, and a right of use class.

The information setting request class indicates a request (or request form) for setting the information within the equipment. The registering data class indicates the data to be registered within the equipment when setting the information. The information setting service class indicates a service that sets the information within the equipment. The right of use class indicates the right of use (corresponding to the session) of a certain service, as described above.

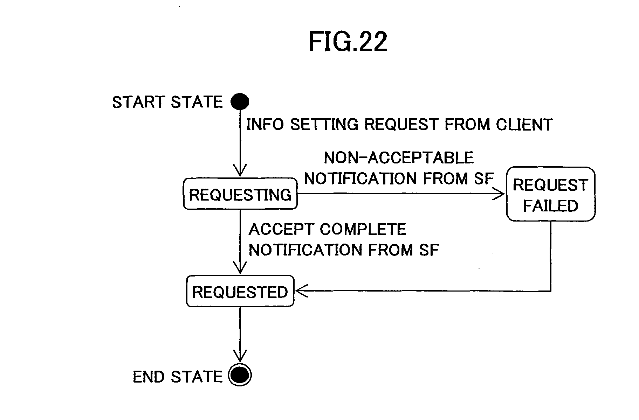

Next, a description will be given of state transitions of an information setting request object of the information setting request class, by referring to FIG. 22. FIG. 22 is a state transition diagram of the information setting request.

As shown in FIG. 22, the information setting request object assumes a requesting state when an information setting request event is generated from the client. The information setting request object makes a transition from the requesting state to a request failed state and assumes an end state, if an non-acceptable notification is received from the SF. In addition, the information setting request object makes a transition from the requesting state to a requested state and assumes the end state, if an accept complete notification is received from the SF.

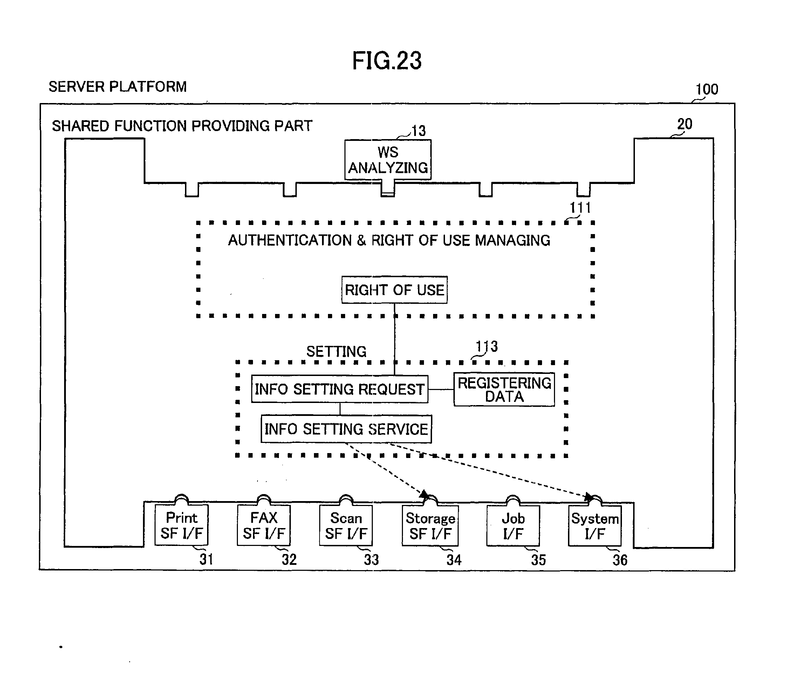

FIG. 23 is a diagram showing a functional structure of the server platform 100. As shown in FIG. 23, the shared function providing part 20 includes an authentication and right of use managing part 111 and a setting part 113. The authentication and right of use managing part 111 includes a right of use class. The setting part 113 includes an information setting request class, a registering data class, and an information setting service class. As shown in FIG. 23, the functions related to the setting of the data (or information) within the equipment may be shared and included in the shared function providing part 20, within the server platform 100.

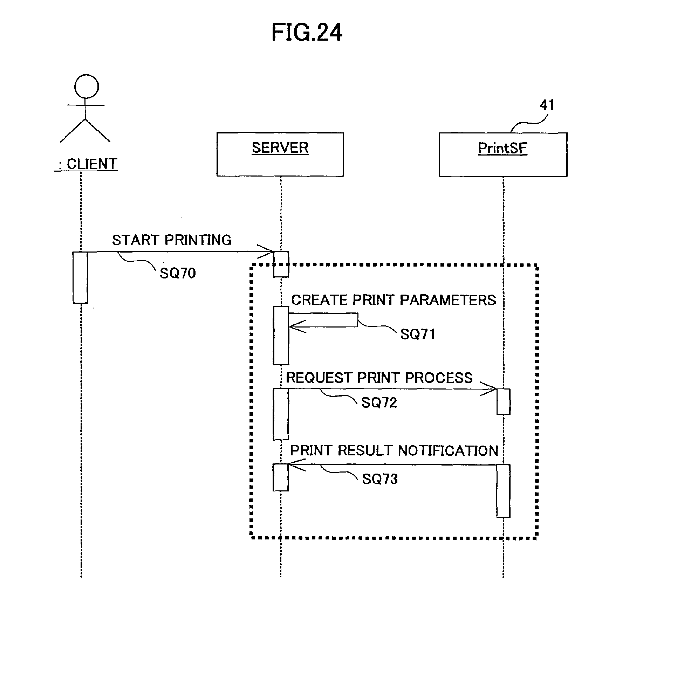

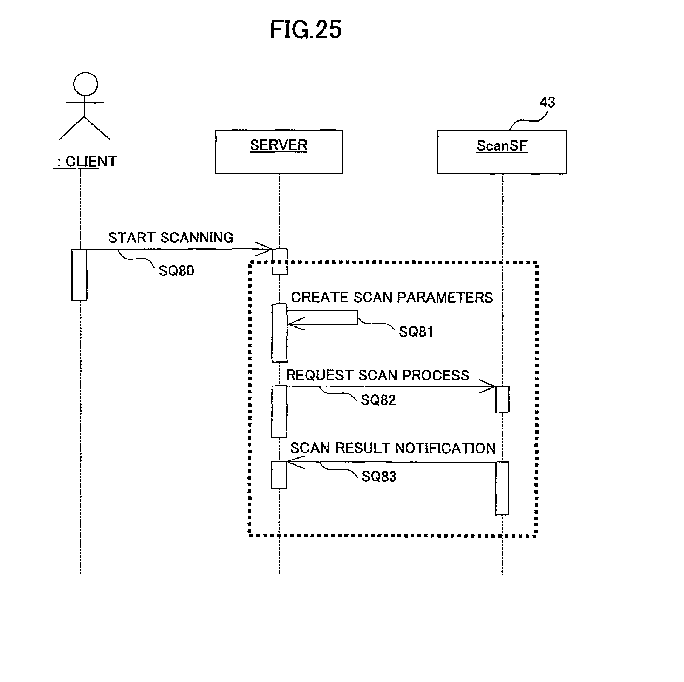

Next, a description will be given of another concept of the functions related to the shared processes via the network, by referring to FIGS. 24 and 25.

FIG. 24 is a sequence diagram showing a print operation. Similarly to the sequence SQ3 shown in FIG. 9, the client who requests the start of the printing sends a print start request to the server (sequence SQ70). When the print start request is received from the client, the server creates print parameters based on information included in the print start request (sequence SQ71). Then, the server supplies the created parameters to the print SF 41 and requests a print process (sequence SQ72). The print SF 41 carries out the print process based on the supplied print parameters, and notifies a print result to the server (sequence SQ73).

FIG. 25 is a sequence diagram showing a scanner operation. The client who requests the start of the scanning sends a scan start request to the server (sequence SQ80). When the scan start request is received from the client, the server creates scan parameters based on information included in the scan start request (sequence SQ81). Then, the server supplies the created scan parameters to the scan SF 43 and requests a scan process (sequence SQ82). The scan SF 43 carries out the scan process based on the supplied scan parameters, and notifies a scan result to the server (sequence SQ83).

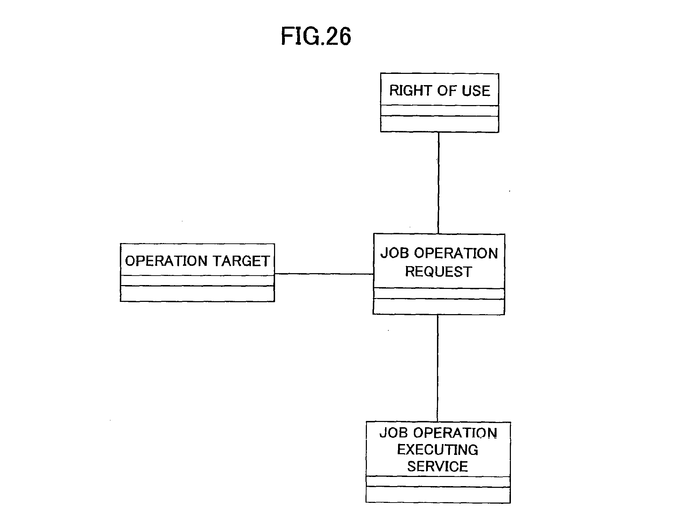

As shown in FIGS. 24 and 25, the portions surrounded by dotted lines that carry out processes related to the print and scanner operations can be shared. A relationship of classes related to the print and scanner operations, that is implemented in the shared function providing part 20 of the server platform 100, is shown in FIG. 26.

FIG. 26 is a class diagram showing a relationship of classes related to the print and scanner operations. As shown in FIG. 26, the shared function providing part 20 includes a job operation request class, an operation target class, a job operation executing service class, and a right of use class.

The job operation request class indicates a request (or request form) for a job operation. It is assumed that a job requires time until it is completed, and that a job complete notification is separately notified from the SF layer. The operation target class indicates a target job operation. The job operation executing service class indicates a service for executing a job operation within the equipment. The right of use class indicates the right of use (corresponding to the session) of a certain service, as described above.

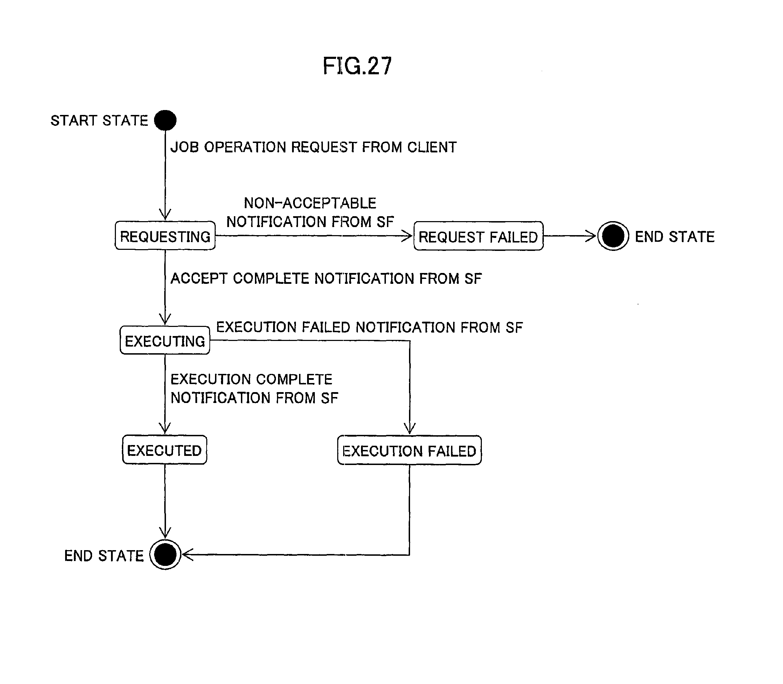

Next, a description will be given of state transitions of a job operation request object of the job operation request class, by referring to FIG. 27. FIG. 27 is a state transition diagram of the job operation request.

As shown in FIG. 27, the job operation request object assumes a requesting state when a job operation request event is generated from the client. The job operation request object makes a transition from the requesting state to a request failed state and assumes an end state, if an non-acceptable notification is received from the SF. In addition, the job operation request object makes a transition from the requesting state to a request executing state, if an accept complete notification is received from the SF. If an execution failed notification event is generated from the SF, the job operation request object makes a transition from the request executing state to an execution failed state and assumes an end state. Further, the job operation request object makes a transition from the request executing state to a request executed state and assumes the end state, if an execution complete notification event is generated from the SF.

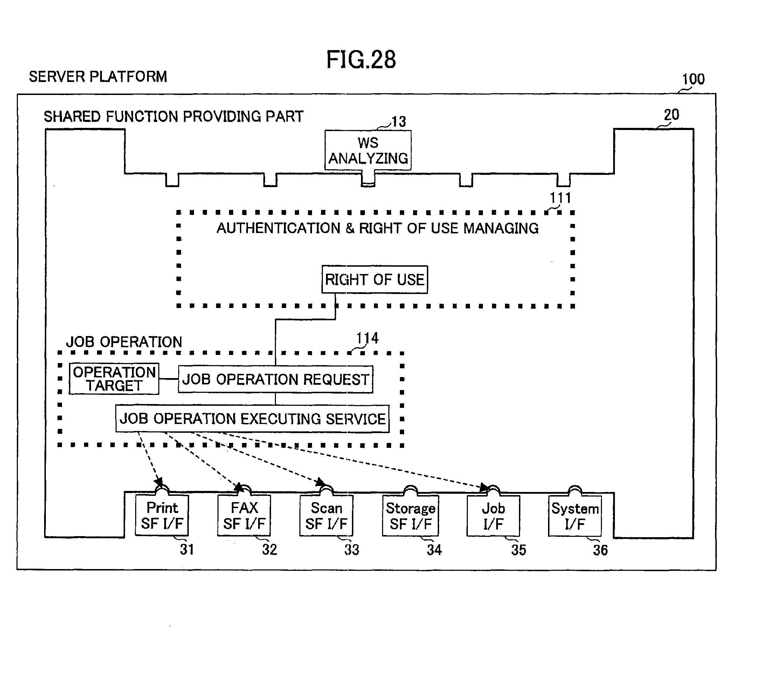

FIG. 28 is a diagram showing a functional structure of the server platform 100. As shown in FIG. 28, the shared function providing part 20 includes an authentication and right of use managing part 111 and a job operation part 114. The authentication and right of use managing part 111 includes a right of use class. The job operation part 114 includes a job operation request class, an operation target class, and a job operation executing service class. As shown in FIG. 28, the functions related to the operations with respect to the job may be shared and included in the shared function providing part 20, within the server platform 100.

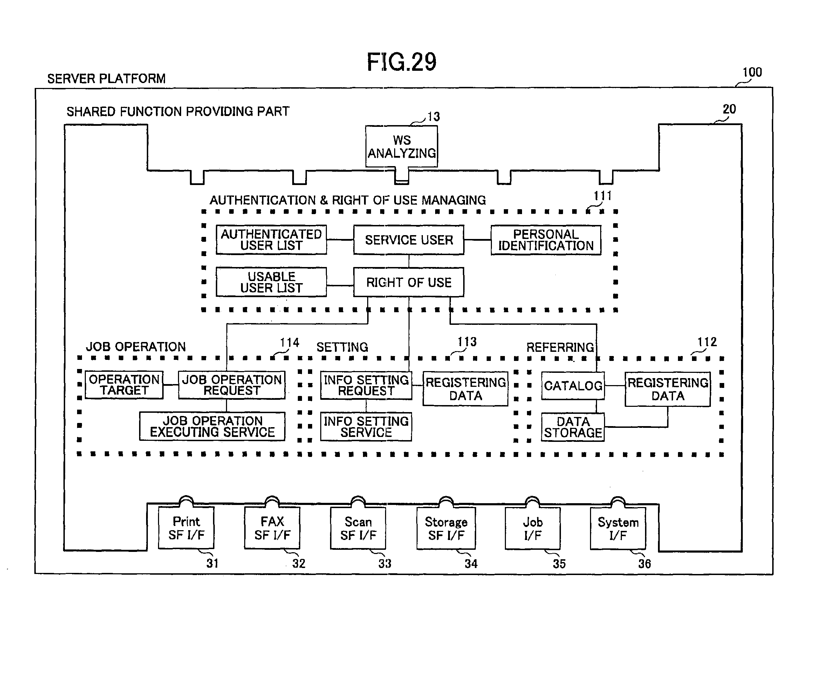

FIG. 29 is a diagram showing an entire functional structure of the server platform 100. As shown in FIG. 29, the shared function providing part 20 includes an authentication and right of use managing part 111, a referring part 112, a setting part 113 and a job operation part 114. The authentication and right of use managing part 111 includes a service user class, a personal identification class, an authenticated user list class, a right of use class, and a usable user list class. The referring part 112 includes a target class, a referring data class, and a data storage class. The setting part 113 includes an information setting request class, a registering data class, and an information setting service class. The job operation part 114 includes a job operation request class, an operation target class, and a job operation executing service class.

As shown in FIG. 29, the functions related to the processes via the network may be shared and included in the shared function providing part 20, within the server platform 100. By sharing the functions related to the processes via the network, it is possible to reduce the number of design steps and to reduce the code size of each application. Furthermore, if an evaluation is made with respect to the shared function providing part 20, the services having the same specifications and the same quality may be used in each application, thereby making it possible to secure a desired quality of the services.

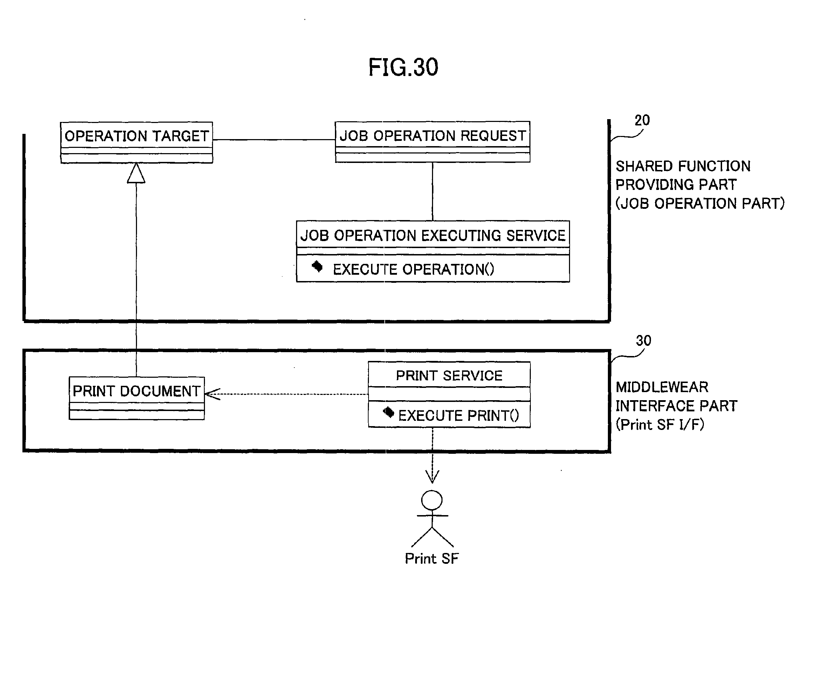

FIG. 30 is a diagram showing a link (or association) of the SF and the server platform 100. As shown in FIG. 30, the shared function providing part 20 of the server platform 100 includes a job operation part 114. The job operation part 114 includes a job operation request class, an operation target class, and a job operation executing service class.

A print service class that is implemented in a print SF I/F 31 of a middlewear interface part 30 inherits the job operation executing service class. In addition, a print document class that is implemented in the print SF I/F 31 of the middlewear interface part 30 inherits the operation target class. For example, when an operation executing method of the job operation executing service class is called, a print executing method of the print service class is called, and the print SF 41 is executed.

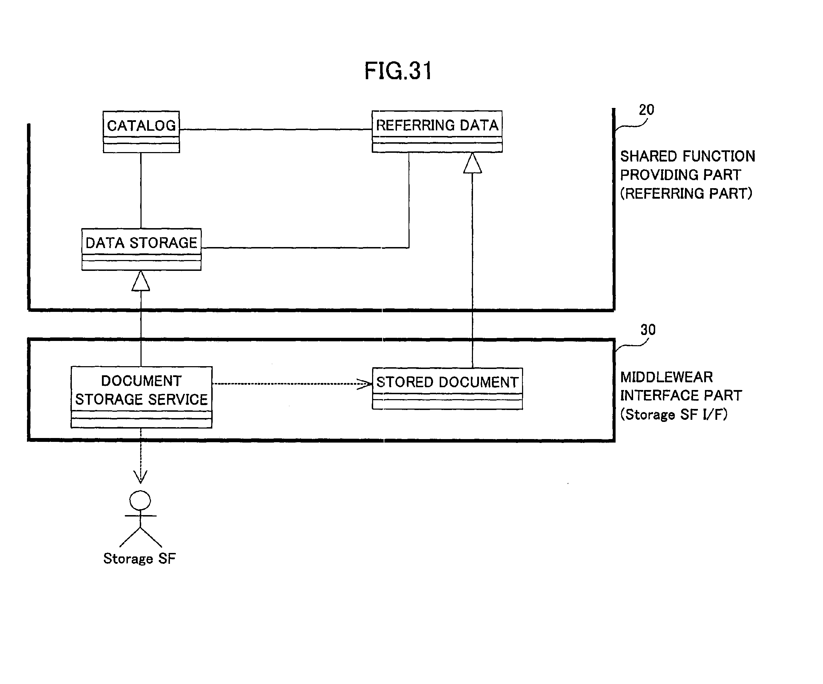

FIG. 31 is a diagram showing a link (or association) of the SF and the server platform 100. As shown in FIG. 31, the shared function providing part 20 of the server platform 100 includes a referring part 112. The referring part 112 includes a catalog class, a referring data class, and a data storage class.

A document storage service class that is implemented in a storage SF I/F 34 of a middlewear interface part 30 inherits the data storage class. A stored document class that is implemented in the storage SF I/F 34 of the middlewear interface part 30 inherits the referring data class. For example, when a method of the data storage class is called, a method of the document storage service class is called, and the storage SF 34 is executed.

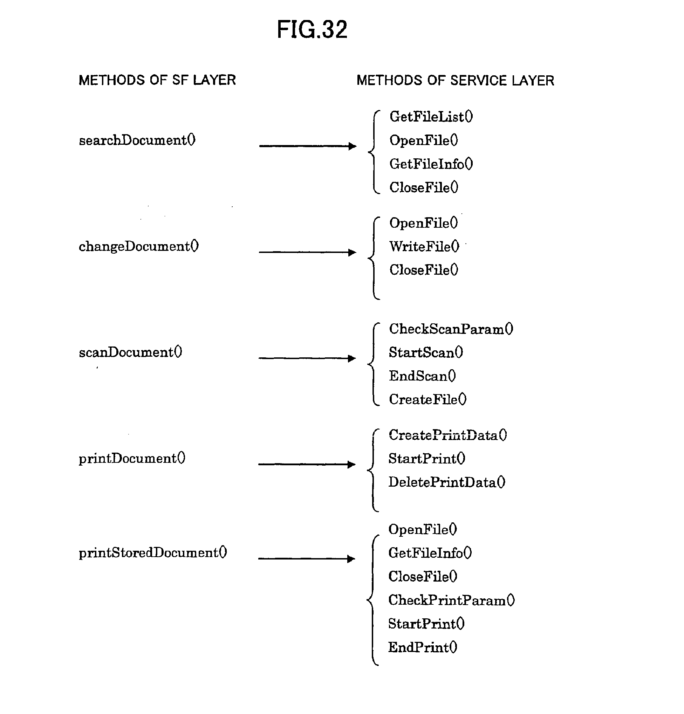

FIG. 32 is a diagram for explaining differences in interfaces of the SF layer and the service layer. As shown in FIG. 32, a GetFileList method, an OpenFile method, a GetFileInfo method and a CloseFile method are implemented in the service layer, in correspondence with a searchDocument method of the SF layer.

An OpenFile method, a WriteFile method and a CloseFile method are implemented in the service layer, in correspondence with a changeDocument method of the SF layer.

A CheckScanParam method, a StartScan method, an EndScan method and a CreateFile method are implemented in the service layer, in correspondence with a scanDocument method of the SF layer.

A CreatePrintData method, a StartPrint method and a DeletePrintData method are implemented in the service layer, in correspondence with a printDocument method of the SF layer.

An OpenFile method, a GetFileInfo method, a CloseFile method, a CheckPrintParam method, a StartPrint method and an EndPrint method are implemented in the service layer, in correspondence with a printStoredDocument method of the SF layer.

The processing unit of the methods of the SF layer is "Document", and the processing unit and the representation format are selected by the user. On the other hand, the processing unit of the methods of the service layer is "File", and the processing unit and the representation format are selected by the machine.

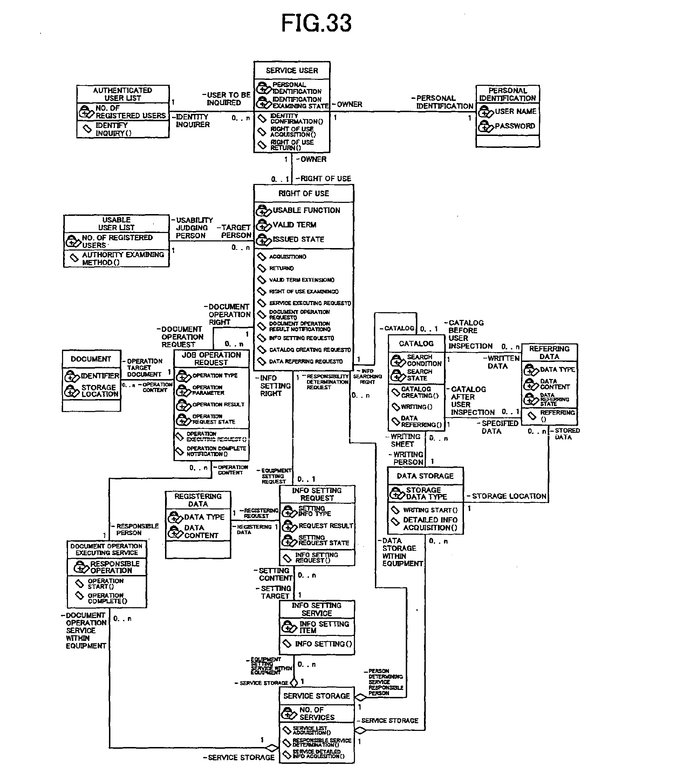

Next, a description will be given of an entire relationship of the classes that are implemented in the shared function providing part 20 of the server platform 100, by referring to FIG. 33. FIG. 33 is a class diagram showing the entire relationship of the classes. FIG. 33 shows the classes for a document operation which is used as one example of the job operation.

As shown in FIG. 33, a service user class includes a personal identification and an identification examining state as attribute values, and includes an identification method, a right of use acquisition method and a right of use returning method as methods. An authenticated user class includes a number of registered users as the attribute value, and includes an identity inquiring method as the method. A personal identification class includes a user name and a password as the attribute values.

A right of use class includes a usable function, a valid term (or expiry date) and an issued state as the attribute values, and includes an acquisition method, a return method, a valid term extension method, a right of use examining method, a service executing request method, a document operation request method, a document operation result notification method, an information setting request method, a catalog creating request method and a data referring request method as the methods.

A usable user list class includes a number of registered users as the attribute value, and includes an authority examining method as the method. A catalog class includes a search condition and a search state as the attribute values, and includes a catalog creating method, a writing method and a data referring method as the methods.

A referring data class includes a data type, a data content and a data referring state as the attribute values, and includes a referring method as the method. A data storage class includes a storage data type as the attribute value, and includes a writing start method and a detailed information acquisition method as the methods.

An information setting request class includes a setting information type, a request result and a setting request state as the attribute values, and includes an information setting request method as the method. A registering data class includes a data type and a data content as the attribute values. An information setting service class includes an information setting item as the attribute value, and includes an information setting method as the method.

A job operation request class includes an operation type, an operation parameter, an operation result and an operation request state as the attribute values, and includes an operation executing request method and an operation complete notification method as the methods.

A document class includes an identifier and a storage location as the attribute values. A document operation executing service class includes a responsible operation as the attribute value, and includes an operation start method and an operation complete method as the methods. A service storage class includes a number of services as the attribute value, and includes a service list acquisition method, a responsible service determination method and a service detailed information acquisition method as the methods.

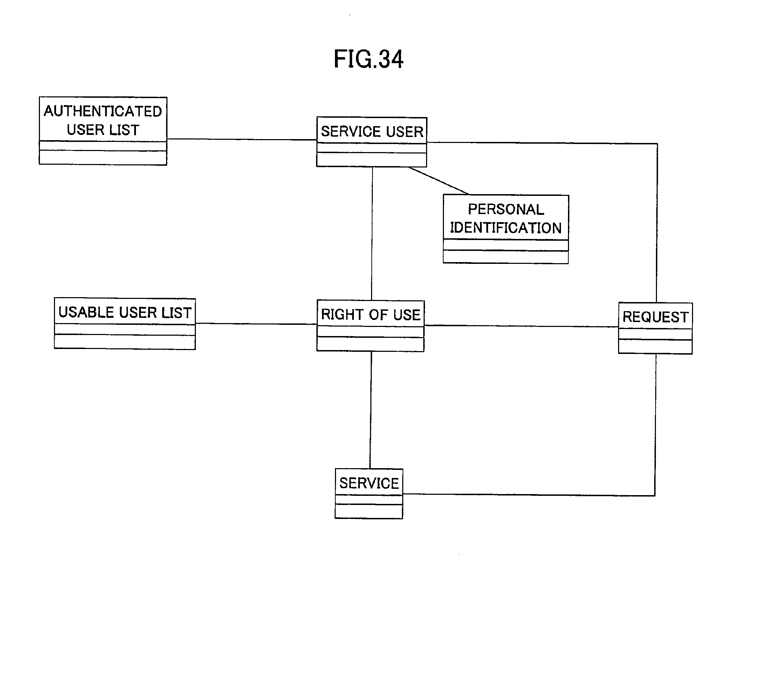

In FIG. 29, the shared function providing part 20 is formed by the authentication and right of use managing part 111, the referring part 112, the setting part 113 and the job operation part 114. However, the shared function providing part 20 may be formed by a single part as shown in FIG. 34. FIG. 34 is a class diagram showing the shared function providing part 20 that is formed by a single part.

As shown in FIG. 34, the shared function providing part 20 includes a service user class, a personal identification class, an authenticated user list class, a right of use class, a usable user list class, a request class and a service class.

The service user class indicates users of the service (that is, service users). The personal identification class indicates the personal identification of the service user. The authenticated user list class indicates a list of authenticated service users. The right of use class indicates a right of use (corresponding to a session) of a certain service. The usable user list class indicates a list of users capable of using various kinds of services. The request class indicates a request (or request form) of a process. The service class indicates a service that is usable by the service user.

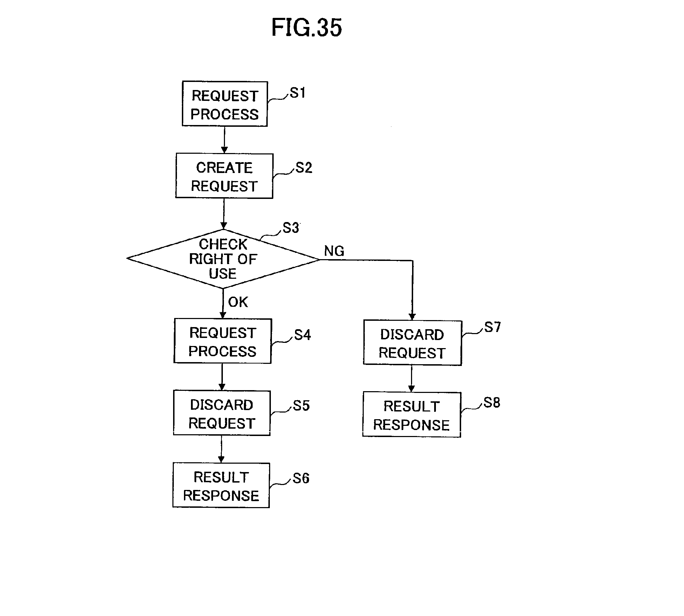

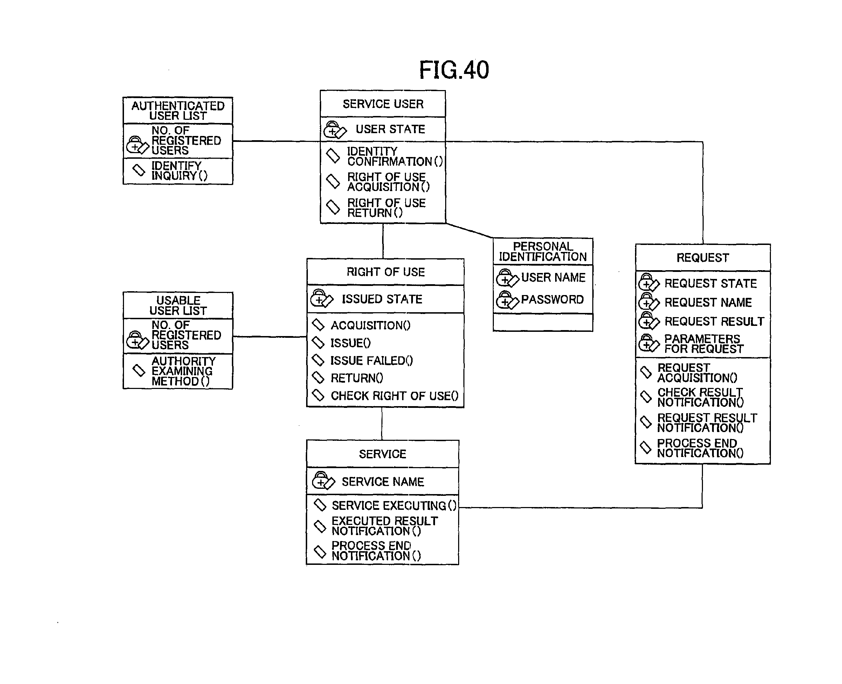

Next, a description will be given of the concept of the functions related to the shared processes via the network. FIG. 35 is a flow chart for explaining request and response operations. Generally, the client who requests a process advances to a step S1 shown in FIG. 35, and sends a process request to the server that is connected to the client via the network. The server that receives the process request from the client advances to a step S2, and creates a request (or request form) having attribute values shown in FIG. 40 which will be described later, for example. In addition, the server advances to a step S3 and checks the right of use.

If the check of the right of use in the step S3 is OK, the server advances to a step S4 and makes a process request in correspondence with the received process request. The server then advances to a step S5, and discards the request (or request form) created in the step S2. The server then advances to a step S6, and sends a result response to the client.

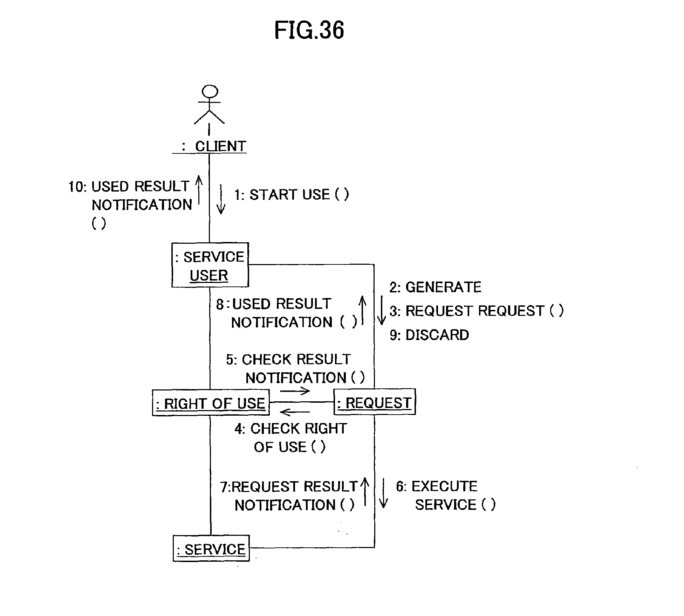

On the other hand, if the check of the right of use in the step 33 is no good (NG), the server advances to a step S7, and discards the request (or request form) that is created in the step S2. The server then advances to a step S8, and sends a result response to the client. FIG. 36 is a collaboration diagram for a case where the check of the right of use in the step S3 is OK.

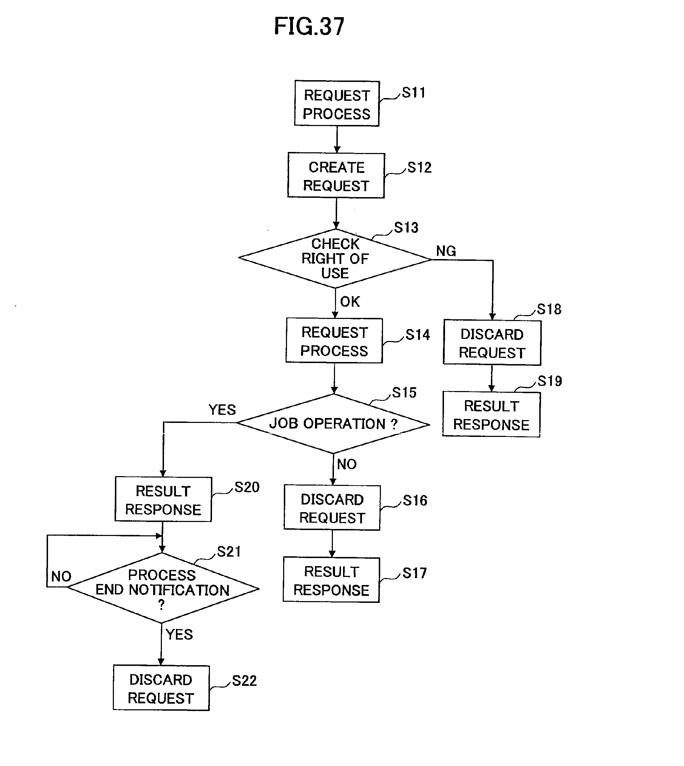

FIG. 37 is a flow chart for explaining a job operation. Generally, the client who requests a process advances to a step S11 shown in FIG. 37, and sends a process request to the server that is connected to the client via the network. The server that receives the process request from the client advances to a step S12, and creates a request (or request form). In addition, the server advances to a step S13 and checks the right of use.

If the check of the right of use in the step S13 is OK, the server advances to a step S14 and makes a process request in correspondence with the received process request. The server then advances to a step S15, and judges whether or not a job operation is requested. If other than the job operation is requested (NO in step S15), the server advances to a step S16 and discards the request (or request form) created in the step S12. The server then advances to a step S17, and sends a result response to the client.

On the other hand, if the check of the right of use in the step S13 is no good (NG), the server advances to a step S18, and discards the request (or request form) that is created in the step S12. The server then advances to a step S19, and sends a result response to the client.

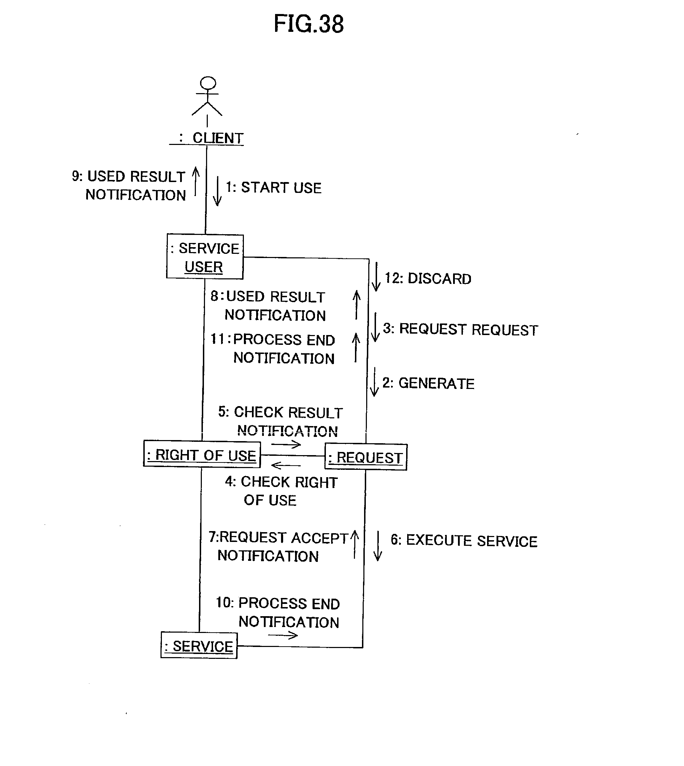

On the other hand, if the job operation is requested (YES in step S15), the server advances to a step S20, and sends a result response to the client. The server repeats a process of a step S21 until a process end notification is received. The step S21 judges whether or not the process end notification is received. When the process end notification is received (YES in step S21), the server advances to a step S22, and discards the request (or request form) that is created in the step S12. FIG. 38 is a collaboration diagram for a case where the job operation is requested.

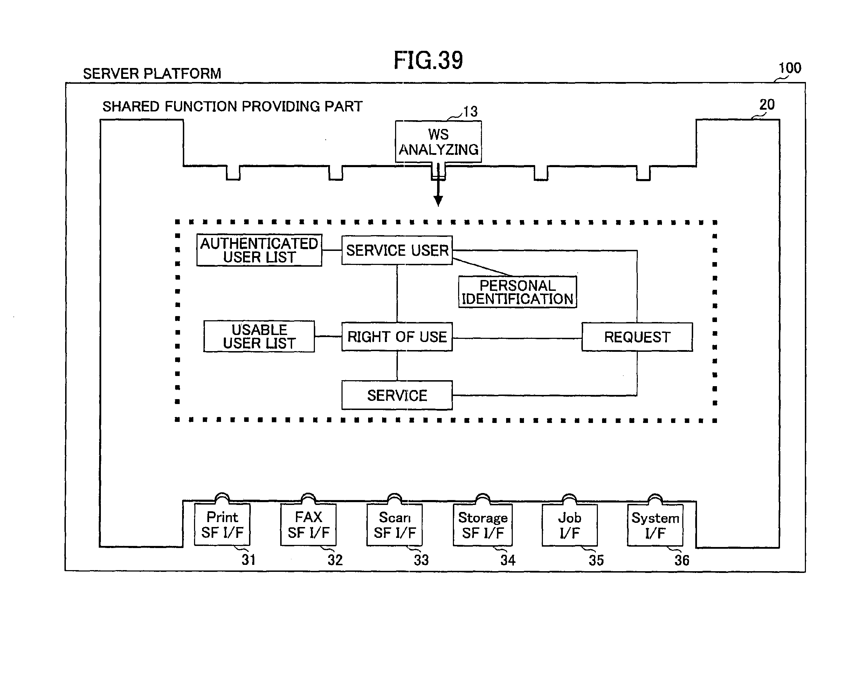

FIG. 39 is a diagram showing an entire functional structure of the server platform 100. As shown in FIG. 39, the shared function providing part 20 may be formed by a single part. FIG. 40 is a class diagram showing an entire relationship of the classes that are implemented in the shared function providing part 20 of the server platform 100 shown in FIG. 39.

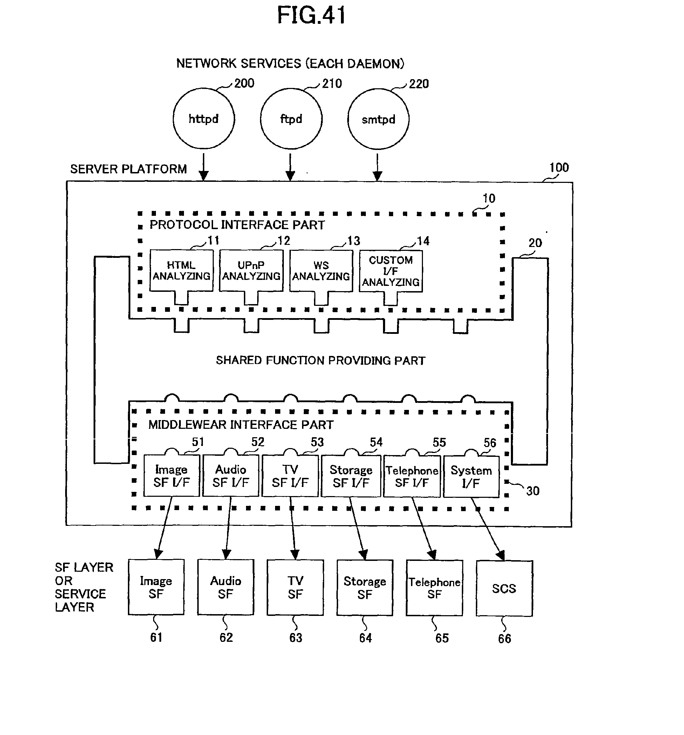

Next, a description will be given of a case where the framework shown in FIG. 4 having the server platform 100 shown in FIG. 29 is applied to other than the printer and the composite apparatus 1200, by referring to FIGS. 41 through 44. Various Daemons shown in FIGS. 41 through 44 are examples, and it is of course possible to employ structures in which some of the shown Daemons are not included and/or some other Daemons are additionally included.

First, a description will be given of a functional structure of an audio visual (AV) equipment for a case where the framework is applied to the AV equipment, by referring to FIG. 41. FIG. 41 is a diagram showing a functional structure of the AV equipment for the case where the framework is applied to the AV equipment. As shown in FIG. 41, the AV equipment includes an httpd 200, an ftpd 210 and an smtpd 220 as the network services.

The server platform 100 includes a protocol interface part 10, a shared function providing part 20 and a middlewear interface part 30. As shown in FIG. 41, the protocol interface part 10 includes an HTML analyzing part 11, an UPnP analyzing part 12, a WS analyzing part 13 and a custom I/F analyzing part 14. In addition, the middlewear interface part 30 includes an image SF I/F 51, an audio SF I/F 52, a television (TV) SF I/F 53, a storage SF I/F 54, a telephone SF I/F 55 and a system I/F 56, as shown in FIG. 41.

In addition, the AV equipment includes as the SF layer or the service layer, an image SF 61 that provides image functions, an audio SF 62 that provides audio functions, a TV SF 63 that provides TV functions, a storage SF 64 that provides storage functions, a telephone SF 65 that provides telephone functions, and a system control service (SCS) 66 that provides functions related to system control of the AV equipment.

As shown in FIG. 41, the framework shown in FIG. 4 having the server platform 100 shown in FIG. 29 may be applied to the AV equipment. The programs of the AV equipment may be preinstalled in the AV equipment or, may be provided to the AV equipment by way of a recording medium 1 or downloaded to the AV equipment via the network. A CPU of the AV equipment executes processes according to the programs.

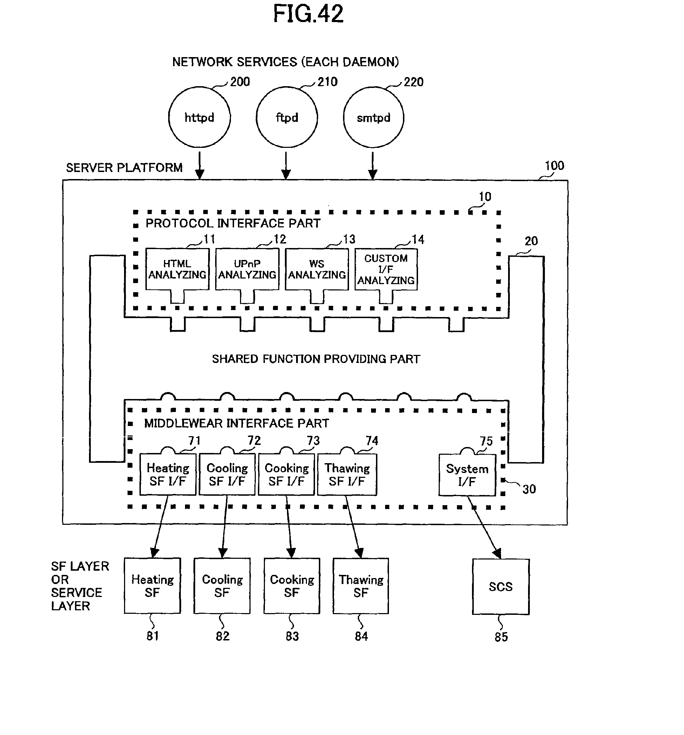

Next, a description will be given of a functional structure of a cooking appliance for a case where the framework is applied to the cooking appliance, by referring to FIG. 42. FIG. 42 is a diagram showing a functional structure of the cooking appliance for the case where the framework is applied to the cooking appliance.

As shown in FIG. 42, the cooking appliance includes an httpd 200, an ftpd 210 and an smtpd 220 as the network services.

The server platform 100 includes a protocol interface part 10, a shared function providing part 20 and a middlewear interface part 30. As shown in FIG. 42, the protocol interface part 10 includes an HTML analyzing part 11, an UPnP analyzing part 12, a WS analyzing part 13 and a custom I/F analyzing part 14. In addition, the middlewear interface part 30 includes a heating SF I/F 71, a cooling SF I/F 72, a cooking SF I/F 73, a thawing SF I/F 74, and a system I/F 75, as shown in FIG. 42.

In addition, the cooking appliance includes as the SF layer or the service layer, a heating SF 81 that provides heating functions, a cooling SF 82 that provides cooling functions, a cooking SF 83 that provides cooking functions, a thawing SF 84 that provides thawing functions, and a system control service (SCS) 85 that provides functions related to system control of the cooking appliance.

As shown in FIG. 42, the framework shown in FIG. 4 having the server platform 100 shown in FIG. 29 may be applied to the cooking appliance. The programs of the cooking appliance may be preinstalled in the cooking appliance or, may be provided to the cooking appliance by way of a recording medium 1 or downloaded to the cooking appliance via the network. A CPU of the cooking appliance executes processes according to the programs.

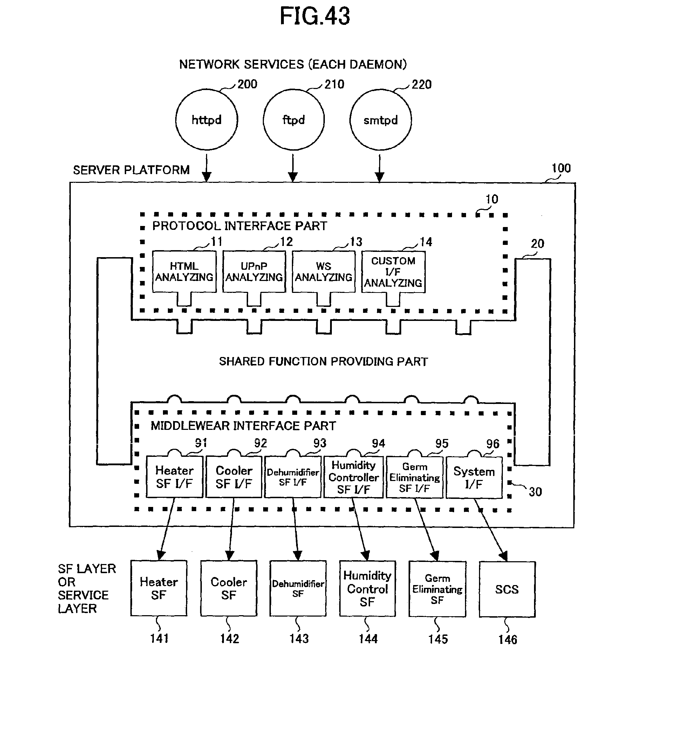

Next, a description will be given of a functional structure of an air conditioner for a case where the framework is applied to the air conditioner, by referring to FIG. 43. FIG. 43 is a diagram showing a functional structure of the air conditioner for the case where the framework is applied to the air conditioner.

As shown in FIG. 43, the air conditioner includes an httpd 200, an ftpd 210 and an smtpd 220 as the network services.

The server platform 100 includes a protocol interface part 10, a shared function providing part 20 and a middlewear interface part 30. As shown in FIG. 43, the protocol interface part 10 includes an HTML analyzing part 11, an UPnP analyzing part 12, a WS analyzing part 13 and a custom I/F analyzing part 14. In addition, the middlewear interface part 30 includes a heater SF I/F 91, a cooler SF I/F 92, a dehumidifier SF I/F 93, a humidity controller SF I/F 94, a germ eliminator (or killer) SF I/F 95 and a system I/F 96, as shown in FIG. 43.

In addition, the air conditioner includes as the SF layer or the service layer, a heater SF 141 that provides heater functions, a cooler SF 142 that provides cooler functions, a dehumidifier SF 143 that provides dehumidifier functions, a humidity controller SF 144 that provides humidity controller functions, a germ eliminator (or killer) SF I/F 145 that provides germ eliminator functions, and a system control service (SCS) 146 that provides functions related to system control of the air conditioner.

As shown in FIG. 43, the framework shown in FIG. 4 having the server platform 100 shown in FIG. 29 may be applied to the air conditioner. The programs of the air conditioner may be preinstalled in the air conditioner or, may be provided to the air conditioner by way of a recording medium 1 or downloaded to the air conditioner via the network. A CPU of the air conditioner executes processes according to the programs.

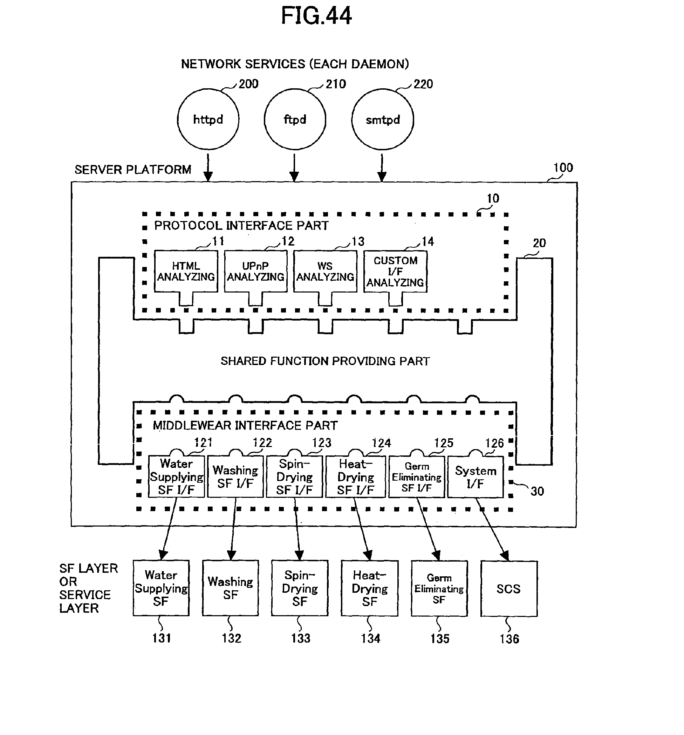

Next, a description will be given of a functional structure of a washing machine for a case where the framework is applied to the air conditioner, by referring to FIG. 44. FIG. 44 is a diagram showing a functional structure of the washing machine for the case where the framework is applied to the washing machine.

As shown in FIG. 44, the washing machine includes an httpd 200, an ftpd 210 and an smtpd 220 as the network services.

The server platform 100 includes a protocol interface part 10, a shared function providing part 20 and a middlewear interface part 30. As shown in FIG. 44, the protocol interface part 10 includes an HTML analyzing part 11, an UPnP analyzing part 12, a WS analyzing part 13 and a custom I/F analyzing part 14. In addition, the middlewear interface part 30 includes a water supplying SF I/F 121, a washing SF I/F 122, a spin-drying SF I/F 123, a heat-drying SF I/F 124, a germ eliminator SF I/F 125 and a system I/F 126, as shown in FIG. 44.

In addition, the washing machine includes as the SF layer or the service layer, a water supplying SF 131 that provides water supplying functions, a washing SF 132 that provides washing functions, a spin-drying SF 133 that provides spin-drying functions, a heat-drying SF 134 that provides heat-drying functions, a germ eliminator SF I/F 135 that provides germ eliminator functions, and a system control service (SCS) 136 that provides functions related to system control of the washing machine.

As shown in FIG. 44, the framework shown in FIG. 4 having the server platform 100 shown in FIG. 29 may be applied to the washing machine. The programs of the washing machine may be preinstalled in the washing machine or, may be provided to the washing machine by way of a recording medium 1 or downloaded to the washing machine via the network. A CPU of the washing machine executes processes according to the programs.

Therefore, according to the present invention, it is possible to realize service providing methods, service providing apparatuses, computer-readable storage media and computer program products that are easy to develop and can provide services having a desired quality.

Further, the present invention is not limited to these embodiments, but various variations and modifications may be made without departing from the scope of the present invention.

## Claims

1. A service providing apparatus for providing a plurality of services in response to requests from a terminal equipment that is coupled thereto via a network, **characterized by**:
first interface means for a first function and used for connection to the terminal equipment;
second interface means for a second function and shared by the terminal equipment and processes of the service providing apparatus; and
shared function providing means, interposed between the first and second interface means, for providing shared functions that are used when the terminal equipment that is connected to the service providing apparatus using the first interface means uses the second function.

2. The service providing apparatus as claimed in claim 1, **characterized in that**:
the first interface means absorbs differences in communication protocols used by the terminal equipment that is connected to the service providing apparatus via the network; and
the shared function providing means provides the shared functions when using the second function, regardless of the differences in the communication protocols.

3. A service providing method adapted to a service providing apparatus that provides a plurality of services in response to requests from a terminal equipment that is coupled thereto via a network, said service providing apparatus comprising first interface means for a first function and used for connection to the terminal equipment, and second interface means for a second function and shared by the terminal equipment and processes of the service providing apparatus, and shared function providing means interposed between the first and second interface means, **characterized by**:
a step providing the shared functions by the shared function providing means when the terminal equipment is connected to the service providing apparatus using the first interface means and uses the second function.

4. The service providing method as claimed in claim 3, **characterized by**:
a step absorbing, by the first interface means, differences in communication protocols used by the terminal equipment that is connected to the service providing apparatus via the network; and
a step providing, by the shared function providing means, the shared functions when using the second function, regardless of the differences in the communication protocols.

5. A computer program product comprising a program for causing a computer to operate as a service providing apparatus for providing a plurality of services in response to requests from a terminal equipment that is coupled thereto via a network, **characterized in that** the program causes the computer to function as:
first interface means for a first function and used for connection to the terminal equipment;
second interface means for a second function and shared by the terminal equipment and processes of the service providing apparatus; and
shared function providing means, interposed between the first and second interface means, for providing shared functions that are used when the terminal equipment that is connected to the service providing apparatus using the first interface means uses the second function.

6. The computer program product as claimed in claim 5, **characterized in that** the program causes the computer to function so that:
the first interface means absorbs differences in communication protocols used by the terminal equipment that is connected to the service providing apparatus via the network; and
the shared function providing means provides the shared functions when using the second function, regardless of the differences in the communication protocols.

7. A computer-readable storage medium comprising the computer program product as claimed in claim 5 or 6, **characterized in that** the program is stored in a recording medium.
